(19) **Europäisches Patentamt**
**European Patent Office**
**Office européen des brevets**

(11) **EP 1 757 514 A1**

(12) **EUROPEAN PATENT APPLICATION**
published in accordance with Art. 158(3) EPC

(43) Date of publication:
**28.02.2007 Bulletin 2007/09**

(51) Int Cl.:
**B62D 57/032** (2006.01)

(21) Application number: **05736823.5**

(22) Date of filing: **28.04.2005**

(86) International application number:
**PCT/JP2005/008113**

(87) International publication number:
**WO 2005/105557 (10.11.2005 Gazette 2005/45)**

(84) Designated Contracting States:
**DE FR GB**

(30) Priority: **01.05.2004 JP 2004163849**

(71) Applicant: **Urakami, Fukashi**
**Kanagawa 234-0054 (JP)**

(72) Inventor: **Urakami, Fukashi**
**Kanagawa 234-0054 (JP)**

(74) Representative: **Strehl Schübel-Hopf & Partner**
**Maximilianstrasse 54**
**D-80504 München (DE)**

(54) **DEVICE MOVABLE ALONG SURFACE OF OBJECT**

(57) A device movable along the surface of an object, comprising two sets of suction disk units having negative pressure regulating valve units with a function to selectively control the degree of vacuum.

A reciprocating actuator unit connecting these two sets of suction disk units to each other further comprises a left side reciprocating actuator, a right side reciprocating actuator, and a connection means for the rod case units of the reciprocating actuators.

The connection means restricts these two sets of reciprocating actuators in a direction parallel with the moving direction of the device so that the relative position of these two sets of reciprocating actuators is kept unchanged.

Also, two types of wheels, i.e., one having a rotating shaft parallel with the moving direction of the device and the other having a rotating shaft orthogonal to the moving direction are fitted to the suction disk units, and these two types of wheels are selectively pressed against the surface of the object according to the shape of the device for each time series when the device performs steering operation.

Fig. 10

° Stopper kicked to the surface
⊚ Caster kicked to the surface

## Description

### Technical Field

This invention concerns a device capable of moving along a surface, such as the exterior and the interior wall surface, the floor surface and the ceiling surface of a built structure and the underwater surface, such as the underwater surface of a waterway in a power plant and the underwater surface in a water tank, for example, for the purpose, among others, of cleaning said surface.

### Prior Art

This inventor previously proposed a device capable of moving along a surface disclosed in Japanese patent No. 3175052 and in U.S. Patent No. 5,161,631. The device is capable of moving along a surface, said device having at least two suction disk units linked to each other via a coupling means which can be extended and contracted, each of such suction disk units having a state setting means which selectively sets said suction disk unit at a movable state which allows such suction disk unit to move along the surface and at a surface-engaged, non-movable state which allows such suction disk unit to engage with the surface and become stationary as to its position, wherein one suction disk unit is caused to move along the surface when that unit is set at the movable state along the surface and the other suction disk unit is set at the surface-engaged, non-movable state on the surface when the coupling means is extended and contracted.

### Disclosure of the Invention

The above-described conventional device has the following problems to be solved.
The traditional device capable of moving along a surface, such as the one disclosed in Japanese patent No.3175052 and in U.S. Patent No. 5,161,631, involves certain problems.
The problems concern the steer performance.
That is, there was a problem that the minimum small turn radius was not able to be reduced.
Next, there was a problem that was not able to turn then and there.
In addition, there was a problem with bad reproducibility of the steer movement.
This invention is made in light of the afore-described facts and its principal technical problem-solving objective is as follows.
The first target is to provide an improved device which has improved movement performance that originates in the minimum small steer radius and in the easy turn in the place.
The second target is to provide an improved device controlled like mind which has improved control performance that originates in the improving reproducibility of the steer movement of the device.
The third target is to provide an improved device which has high production capacity while vacuum cleaning that originates in the increase of the cleaning width of the suction disk units. The increase of the cleaning width of the disks is caused by swinging of the disks.
The fourth target is to provide an improved device which can travel on the surface even if the oil slick adheres to the surface. The function originates in the increase of the driving power of the device that is caused by the increase of the friction between the surface and the suction disk unit at non-movable state.
The fifth target is to provide an improved device which banishes tight work such as a suck work of dirt that a worker holds an end of a heavy weight suction hose connected with a vacuum recovery unit installed in a heavy-duty truck. The moving suction disks of the device collect dirt in place of the worker by being connected with the vacuum recovery unit.

To achieve the afore-described technical problem-solving targets from 1 to the fourth, this invention provides an important technology which makes one suction disk unit at a movable state move easily and surely in the aimed direction by using another suction disk unit at non-movable state of which function is as a kick foot which adheres to the surface strongly.
To use the suction disk unit at non-movable state as the kick foot, it is needed the technology to increase extremely the vacuum degree of the suction disk unit at non-movable state in comparison with the vacuum degree of the moving suction disk at a movable state. To achieve the technology, this invention provides a device comprising two sets of suction disk units having negative pressure regulating valve units with a function to selectively control the degree of vacuum.
The first to achieve the technology which makes one suction disk unit at a movable state move easily and surely in the aimed direction, it is very effective for each suction disk units to have a negative pressure regulating valve unit with a function to selectively control the degree of vacuum.
The second to achieve the technology which makes one suction disk unit at a movable state move easily and surely in the aimed direction, it is very important the composition of an reciprocating actuator unit connecting two sets of suction disk units to each other.

As for the composition of the reciprocating actuator unit connecting two sets of suction disk units to each other, further comprises a left side reciprocating actuator, a right side reciprocating actuator, and a connection means for the rod case units of the reciprocating actuators.

The left side reciprocating actuator comprises a left rod case unit, a left front reciprocating rod arranged forward of the left rod case unit, and a left rear reciprocating rod arranged behind the left rod case unit.

The right side reciprocating actuator comprises a right rod case unit, a right front reciprocating rod arranged forward of the right rod case unit, and a right rear reciprocating rod arranged behind the right rod case unit.

The connection means for the rod case units restricts these two sets of reciprocating actuators in a direction parallel with the moving direction of the device so that the relative position of these two sets of reciprocating actuators is kept unchanged.

The third to achieve the technology which makes one suction disk unit at a movable state move easily and surely in the aimed direction, in the second invention having wheels with rotating shafts, it is very important for the rotating shafts to be controlled the direction of the shafts according to the shape of the device for each time series when the device performs steering operation.

This invention proposes a technology mentioned bellow to achieve the third technology mentioned above by using a cheap method by a simple structure.

The device is equipped with two types of wheels, i.e., one having a rotating shaft parallel with the moving direction of the device and the other having a rotating shaft orthogonal to the moving direction are fitted to the suction disk units, and these two types of wheels are selectively pressed against the surface of the object according to the shape of the device for each time series when the device performs steering operation.

To achieve the afore-described technical problem-solving target of the fifth, this invention proposes a technology mentioned bellow to achieve the fifth target.

The first to achieve the fifth target, it is needed the technology to increase extremely the vacuum degree of the moving suction disk at non-movable state in comparison with the vacuum degree of the suction disk unit at a movable state.

The second to achieve the fifth target, each suction disk unit is equipped with a vacuum seal breaking means so that the vacuum seal revolts from the surface and the vacuum degree inside of the suction disk unit decreases at arbitrariness. When it is put into the state that one suction disk unit doesn't move along the surface, the vacuum degree inside of the other suction disk unit decreases because of revolting of the vacuum seal from the surface in order that the other suction disk moves along the surface.

This invention provides a device capable of moving along a surface having at least two suction disk units which are linked to each other via a coupling means which can be extended and contracted, each of such suction disk units having a means which selectively sets such suction disk unit at a movable state which allows such unit to move along the surface and at a non-traveling state which allows such suction disk unit to engage with the surface and become stationary as to the position, wherein one suction disk unit is caused to move along the surface when that unit is set at the movable state and the other suction disk unit is set at the non-movable state while the coupling means is extended and contracted.

The device of this invention can move along a surface when one suction disk unit is set at a movable state and the other suction disk unit is set at a non-movable state while the coupling means is extended or contracted as the former suction disk unit is caused to move along the surface. Thus, by alternately reversing the movable state and the non-movable state of the two suction disk units while appropriately extending and contracting the coupling means, the device is caused to move along the surface.

Further, when one suction disk unit is set at a movable state and is moved along the surface, the device of this invention carries out suction cleaning of a surface because the sealing member installed on the main body of the suction disk unit is also moved while keeping contact with the surface as the pressure-reduced space in the suction disk unit is reduced.

The operation of the steer mechanism of the device in this invention will be explained below.

The difference point of the first device of this invention and the second device of this invention is in the steer mechanism.

The first device of this invention is equipped with wheels or materials of low friction which are fitted to the suction disk units and selectively pressed against the surface according to the shape of the device for each time series when the device performs steering operation.

The second device of this invention is equipped with two types of wheels, i.e., one having a rotating shaft parallel with the moving direction of the device - the parallel wheel unit - and the other having a rotating shaft orthogonal to the moving direction - the orthogonal wheel unit - are fitted to the suction disk units, and these two types of wheels are selectively pressed against the surface of the object according to the shape of the device for each time series when the device performs steering operation.

It explains the action of the steer in the first device of this invention as follows.

It explains the method to make the device to turn left front as follows.

In the first stage, after the setting that the front suction disk unit is set at the movable state and the rear suction disk unit is set at the non-movable state, the front suction disk unit is caused to move to the left front along the surface when the right rear coupling means - the right rear reciprocating rod arranged behind the right rod case unit - is extended.

In the second stage, after the setting that the front suction disk unit is set at the non-movable state and the rear suction disk unit is set at the movable state, the rear suction disk unit is caused to move to the left front along the surface when the right rear coupling means is contracted.

Thus, the device is helmed to the left front.

It explains the method to make the device to turn right front as follows.

In the first stage, after the setting that the front suction disk unit is set at the movable state and the rear suction disk unit is set at the non-movable state, the front suction disk unit is caused to move to the right front along the surface when the left rear coupling means - the left rear reciprocating rod arranged behind the left rod case unit - is extended.

In the second stage, after the setting that the front suction disk unit is set at the non-movable state and the rear suction disk unit is set at the movable state, the rear suction disk unit is caused to move to the right front along the surface when the left rear coupling means is contracted.

Thus, the device is helmed to the right front.

It explains the action of the steer in the second device of this invention as follows.

First of all, it explains the first method of the action of the steer in the second device of this invention as follows.

It explains the method to make the device to turn left front as follows.

In the first stage, after the setting that the front suction disk unit is set at the movable state by being pressed the orthogonal wheel unit against the surface, and after the setting that the rear suction disk unit is set at the non-traveling state by being pressed the parallel wheel unit against the surface, the front suction disk unit is caused to move to the left front along the surface when the right rear coupling means - the right rear reciprocating rod arranged behind the right rod case unit - is extended.

In the second stage, after the setting that the front suction disk unit is set at the non-movable state by being pressed the parallel wheel unit against the surface, and after the setting that the rear suction disk unit is set at the movable state by being pressed the orthogonal wheel unit against the surface, the rear suction disk unit is caused to move to the left front along the surface when the right rear coupling means is contracted.

Thus, the device is helmed to the left front.

It explains the method to make the device to turn right front as follows.

In the first stage, after the setting that the front suction disk unit is set at the movable state by being pressed the orthogonal wheel unit against the surface, and after the setting that the rear suction disk unit is set at the non-traveling state by being pressed the parallel wheel unit against the surface, the front suction disk unit is caused to move to the right front along the surface when the left rear coupling means - the left rear reciprocating rod arranged behind the left rod case unit - is extended.

In the second stage, after the setting that the front suction disk unit is set at the non-movable state by being pressed the parallel wheel unit against the surface, and after the setting that the rear suction disk unit is set at the movable state by being pressed the orthogonal wheel unit against the surface, the rear suction disk unit is caused to move to the right front along the surface when the left rear coupling means is contracted.

Thus, the device is helmed to the right front.

Second, it explains the second method of the action of the steer in the second device of this invention as follows.

It explains the method to make the device to turn left front as follows.

In the first stage, after the setting that the front suction disk unit is set at the movable state by being pressed the orthogonal wheel unit against the surface, and after the setting that the rear suction disk unit is set at the non-traveling state by being pressed the parallel wheel unit against the surface, the front suction disk unit is caused to swings counterclockwise along the surface when the right front coupling means - the right front reciprocating rod arranged forward the right rod case unit - is extended.

In the second stage, after the setting that the front suction disk unit is set at the movable state by being pressed the orthogonal wheel unit against the surface, and after the setting that the rear suction disk unit is set at the non-traveling state by being pressed the parallel wheel unit against the surface, the front suction disk unit is caused to move to the left front along the surface when both of the right rear and the left rear coupling means are extended.

In the third stage, after the setting that the front suction disk unit is set at the non-movable state by being pressed the parallel wheel unit against the surface, and after the setting that the rear suction disk unit is set at the movable state by being pressed the orthogonal wheel unit against the surface, the rear suction disk unit is caused to move to the left front along the surface when both of the right rear and the left rear coupling means are contracted.

Thus, the device is helmed to the left front.

It explains the method to make the device to turn right front as follows.

In the first stage, after the setting that the front suction disk unit is set at the movable state by being pressed the orthogonal wheel unit against the surface, and after the setting that the rear suction disk unit is set at the non-traveling state by being pressed the parallel wheel unit against the surface, the front suction disk unit is caused to swings clockwise along the surface when the left front coupling means - the left front reciprocating rod arranged forward the left rod case unit - is extended.

In the second stage, after the setting that the front suction disk unit is set at the movable state by being pressed the orthogonal wheel unit against the surface, and after the setting that the rear suction disk unit is set at the non-traveling state by being pressed the parallel wheel unit against the surface, the front suction disk unit is caused to move to the right front along the surface when both of the right rear and the left rear coupling means are extended.

In the third stage, after the setting that the front suction disk unit is set at the non-movable state by being pressed the parallel wheel unit against the surface, and after the setting that the rear suction disk unit is set at the movable state by being pressed the orthogonal wheel unit against the surface, the rear suction disk unit is caused to move to the left front along the surface when both of the right rear and the left rear coupling means are contracted.

Thus, the device is helmed to the right front.

Finally, it explains the third method of the action of the steer in the second device of this invention as follows. It explains the method to make the device to turn left front as follows.

In the first stage, after the setting that the front suction disk unit is set at the movable state by being pressed the orthogonal wheel unit against the surface, and after the setting that the rear suction disk unit is set at the non-traveling state by being pressed the parallel wheel unit against the surface, the front suction disk unit is caused to swings counterclockwise along the surface when the right front coupling means - the right front reciprocating rod arranged forward the right rod case unit - is extended.

In the second stage, after the setting that the front suction disk unit is set at the movable state by being pressed the orthogonal wheel unit against the surface, and after the setting that the rear suction disk unit is set at the non-traveling state by being pressed the parallel wheel unit against the surface, the front suction disk unit is caused to move to the left front along the surface when both of the right rear and the left rear coupling means are extended.

In the third stage, after the setting that the front suction disk unit is set at the non-movable state by being pressed the parallel wheel unit against the surface, and after the setting that the rear suction disk unit is set at the movable state by being pressed the orthogonal wheel unit against the surface, the rear suction disk unit is caused to move to the left front along the surface when both of the right rear and the left rear coupling means are contracted.

Thus, the device is helmed to the left front.

It explains the method to make the device to turn right front as follows.

In the first stage, after the setting that the front suction disk unit is set at the movable state by being pressed the orthogonal wheel unit against the surface, and after the setting that the rear suction disk unit is set at the non-traveling state by being pressed the parallel wheel unit against the surface, the front suction disk unit is caused to swings clockwise along the surface when the left front coupling means - the left front reciprocating rod arranged forward the left rod case unit - is extended.

In the second stage, after the setting that the front suction disk unit is set at the movable state by being pressed the orthogonal wheel unit against the surface, and after the setting that the rear suction disk unit is set at the non-traveling state by being pressed the parallel wheel unit against the surface, the front suction disk unit is caused to move to the right front along the surface when both of the right rear and the left rear coupling means are extended.

In the third stage, after the setting that the front suction disk unit is set at the non-movable state by being pressed the parallel wheel unit against the surface, and after the setting that the rear suction disk unit is set at the movable state by being pressed the orthogonal wheel unit against the surface, the rear suction disk unit is caused to move to the left front along the surface when both of the right rear and the left rear coupling means are contracted.

Thus, the device is helmed to the right front.

About a further action of the device of this invention, after the setting that one suction disk unit is set at the non-traveling state and the other suction disk unit is set at the movable state, dirt etc. are inhaled from the space between the vacuum seal and the surface which is made by the vacuum seal breaking means equipped with the suction disk unit at the movable state, and the dirt etc. are transported to the vacuum recovery unit through the suction hose.

Because the worker is liberated from dangerous work because this device can collect dirt while running for instance in the oil storage, it is very profitable.

The first invention of the inventions afore-described brings an effect that one suction disk unit at movable state is moved easily and surely in the aimed direction by using the other suction disk unit at non-movable state of which function is as a kick foot which adheres to the surface strongly. The effect is brought by a rapid increase of the vacuum level of the suction disk at non-movable state compared with the vacuum level of the suction disk at movable state.

The rapid increase of the vacuum level is brought by the equipment of each suction disk unit of the negative pressure regulating valve unit with a function to selectively control the vacuum level of each suction disk unit.

Further, the first invention of the inventions afore-described brings another effect that one suction disk unit at moving state is swung easily and surely in the aimed direction by using the reciprocating actuator unit described above which connects two sets of suction disk units.

The effect originates in increase of strength of mechanism of the reciprocating actuator unit that transmits swing power.

The reciprocating actuator unit comprises a left side reciprocating actuator, a right side reciprocating actuator, and a connection means for the rod case units of the reciprocating actuators.

The increase of strength of the mechanism originates in the restriction power of the connection means restricted so that a relative position of the right reciprocating actuator and the left reciprocating actuator should not change in a parallel direction in the direction where the device is moved.

The increase of the above-mentioned swing power increases the effect of the suction disk unit as the kick foot further.

The first invention of the inventions afore-described brings the effects as follows.

First, this invention provides a device which has improved movement performance that originates in the minimum small steer radius and in the easy turn in the place.

Second, this invention provides a device controlled like mind which has improved control performance that originates in the improving reproducibility of the steer movement of the device.

Third, this invention provides a device which has high production capacity while vacuum cleaning that originates in the increase of the cleaning width of the suction disk units. The increase of the cleaning width of the disks is caused by swinging of the disks.

Fourth, this invention provides a device which can travel on the surface even if the oil slick adheres to the surface.

The function originates in the increase of the driving power of the device that is caused by the increase of the friction between the surface and the suction disk unit at non-movable state.

As for the second invention of the invention, this invention provides a device which can be moved with stability because the device is excellent in the reproducibility of the moving operation. This feature originates in the feature with a large frictional force in the direction which the rotation axis of the wheel is parallel to, though the frictional force is small in the direction which the rotation axis of the wheel is orthogonal to.

This invention provides a device which makes one suction disk unit at a movable state move easily and surely in the aimed direction. In the second invention having wheels with rotating shafts, it is very important for the rotating shafts to be controlled the direction of the shafts according to the shape of the device for each time series when the device performs steering operation.

This invention provides a device by using a cheap method by a simple structure for the rotating shafts to be controlled the direction of the shafts as described bellow.

The device is equipped with two types of wheels, i.e., one having a rotating shaft parallel with the moving direction of the device and the other having a rotating shaft orthogonal to the moving direction are fitted to the suction disk units, and these two types of wheels are selectively pressed against the surface of the object according to the shape of the device for each time series when the device performs steering operation.

The second invention of the inventions afore-described brings the effects as follows. First, this invention provides a device which has improved movement performance that originates in the minimum small steer radius and in the easy turn in the place.

Second, this invention provides a device controlled like mind which has improved control performance that originates in the improving reproducibility of the steer movement of the device.

Third, this invention provides a device which has high production capacity while vacuum cleaning that originates in the increase of the cleaning width of the suction disk units.

The increase of the cleaning width of the disks is caused by swinging of the disks.

Fourth, this invention provides a device which can travel on the surface even if the oil slick adheres to the surface.

The function originates in the increase of the driving power of the device that is caused by the increase of the friction between the surface and the suction disk unit at non-movable state.

About a further effect of the device of this invention, after the setting that one suction disk unit is set at the non-movable state and the other suction disk unit is set at the movable state, dirt etc. are inhaled from the space between the vacuum seal and the surface which is made by the vacuum seal breaking means equipped with the suction disk unit at the movable state, and the dirt etc. are transported to the vacuum recovery unit through the suction hose.

Thus, this invention provides a device which banishes tight and dangerous work such as a suck work of dirt that a worker holds an end of a heavy weight suction hose connected with a vacuum recovery unit installed in a heavy-duty truck.

The moving suction disks of the device collect dirt in place of the worker by being connected with the vacuum recovery unit while running for instance in the oil storage.

Brief Descriptions of the Figures

Fig. 1 is a plan of one preferred embodiment example of the device constructed in accordance with the first invention of this invention.

Fig. 2 is a side view of the device shown in Fig. 1.

Fig. 3 is an A - A cross-sectional view of the device shown in Fig. 1.

Fig. 4 is a back view that saw the device shown in Fig. 1 from the direction of the surface of an object.

Fig. 5 is a C - C cross-sectional view of the device shown in Fig. 4.

Fig. 6 is an enlarged B - B cross-sectional view of the device shown in Fig. 1 and Fig. 11.

Fig. 7 is a figure showing the total system of this invention.

Fig. 8 is an illustration showing the procedure and state of the device shown in Fig. 1 moving straight ahead toward the right direction of the figure.

Fig. 9 is an illustration showing the procedure and state of the device shown in Fig. 1 moving toward the upper right direction of the figure.

Fig. 10 is an illustration showing the procedure and state of the device shown in Fig. 1 moving straight ahead toward the right direction of the figure while swinging.

Fig. 11 is a plan of one preferred embodiment example of the device constructed in accordance with the second invention of this invention.

Fig. 12 is a side view of the device shown in Fig. 11.

Fig. 13 is a D - D cross-sectional view of the device shown in Fig. 11.

Fig. 14 is a back view that saw the device shown in Fig. 11 from the direction of the surface of an object.

Fig. 15 is a C - C cross-sectional view of the device shown in Fig. 14.

Fig. 16 is an illustration showing the procedure and state of the device shown in Fig. 11 moving straight ahead toward the right direction of the figure.

Fig. 17 is an illustration showing the procedure and state of the device shown in Fig. 11 moving toward the upper right direction of the figure.

Fig. 18 is an illustration showing the procedure and state of the device shown in Fig. 11 moving straight ahead toward the right direction of the figure while swinging.

Fig. 19 is an illustration showing the procedure and state of the device shown in Fig. 11 moving toward the upper right direction of the figure.

Fig. 20 is an illustration showing the procedure and state of the device shown in Fig. 11 moving toward the upper right direction of the figure.

Fig. 21 is an enlarged D - D cross-sectional view of the device shown in Fig. 11.

Best Mode of the Embodiment of This Invention

The present invention will be described further in detail with reference to the drawings attached hereto which show embodiment examples of the device constructed in accordance with this invention.

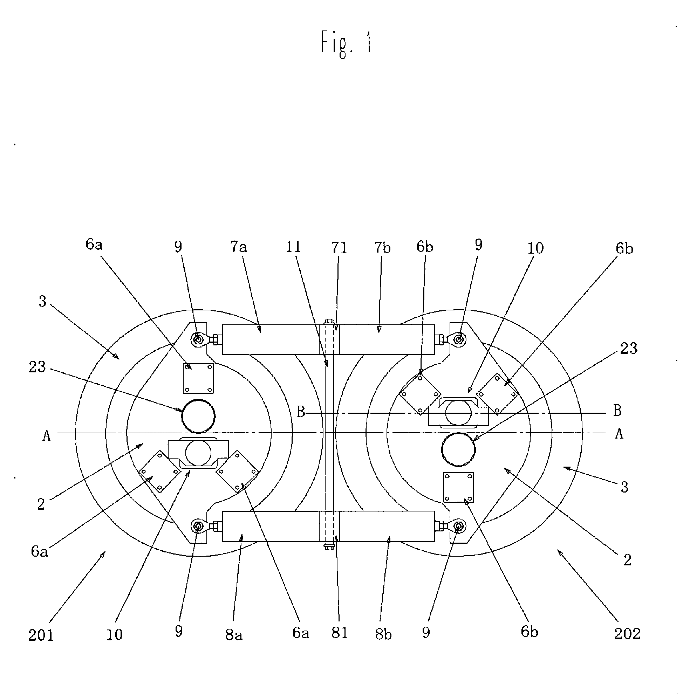

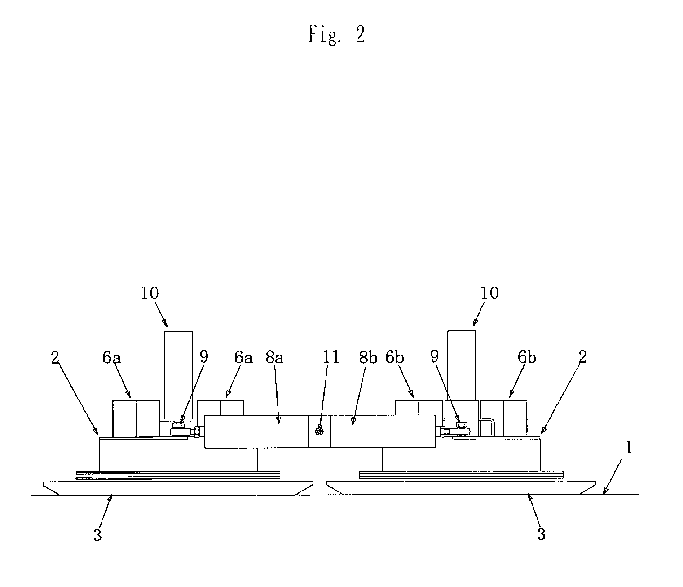

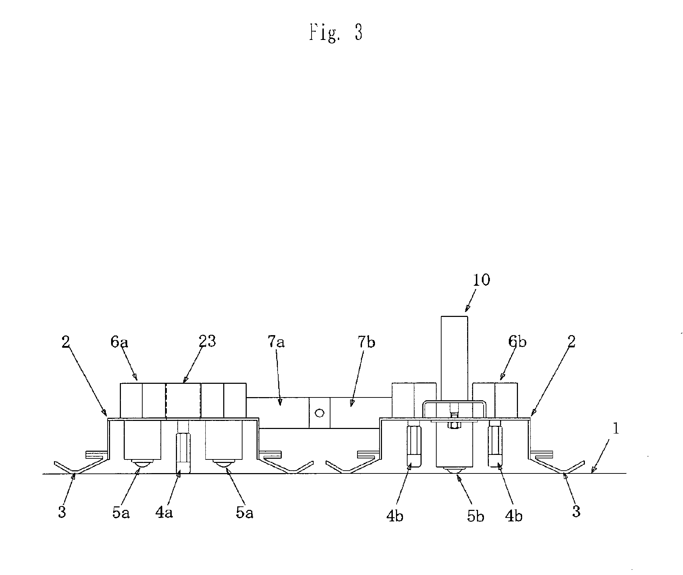

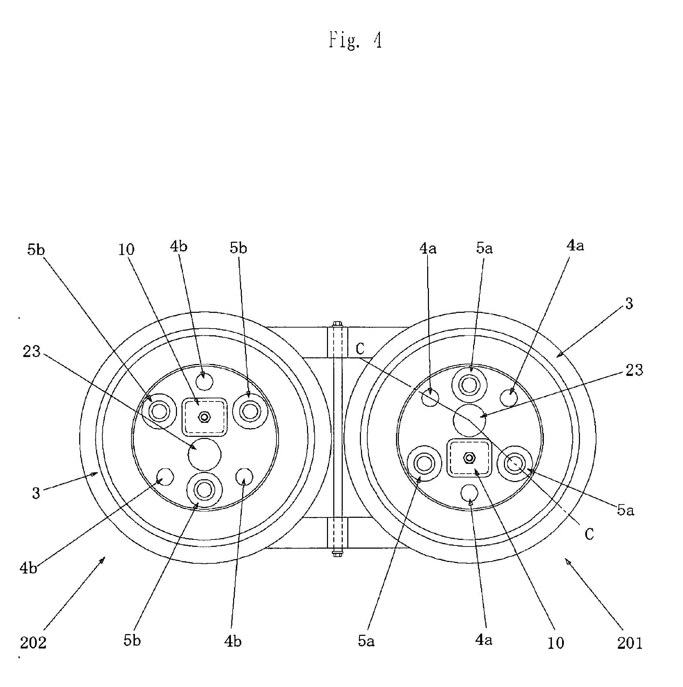

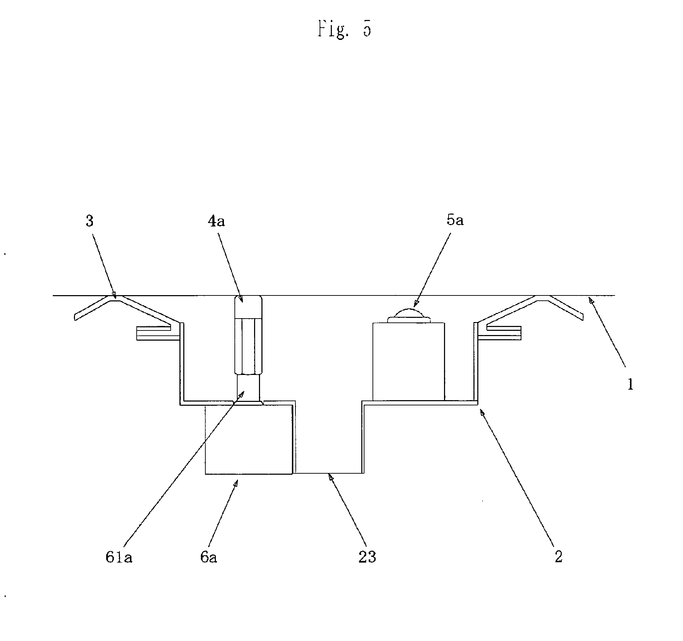

With reference to Figure 1 through Figure 7, the device illustrated therein constructed in accordance with this invention has two suction disk units 201 and 202. The suction disk units 201 and 202 have the suction housing 2 made of a rigid or semi-rigid material such as steel. The suction housing 2 may be of any appropriate shape, but the embodiment example illustrated herein has the shape of a roughly cylindrical-shaped box with a circular shaped plate welded around the opening thereof facing the surface 1.

The circular shaped plate has a vacuum sealing member 3 arranged thereon. The vacuum sealing member 3 has the shape and construction of a mount linked to the circular shaped plate, a ring-shaped lip kept in contact with the surface 1. In the embodiment example, the vacuum sealing member 3 defines a pressure-reduced area 50 jointly with the suction housing 2 and the surface 1.

The vacuum sealing member 3 is made of a non-gas-permeable and relatively soft material, such as polyurethane rubber, and therefore flexes and changes its shape with relatively little force, thereby changing the shape freely following the unevenness of the surface 1.

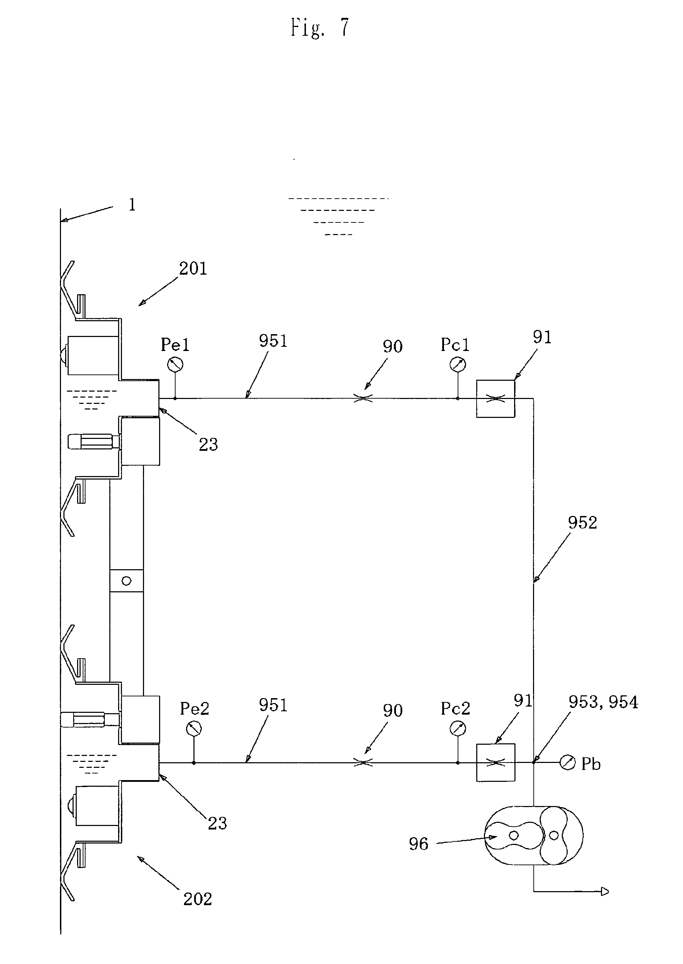

The pressure-reduced area 50 defined by the suction housing 2, the surface 1 and the vacuum sealing member 3 is connected to a pressure reducing means as illustrated in Fig. 7.

The other end of the flexible suction hose 951 is connected to the pressure reducing means 96.

The pressure reducing means 96 may be any well-known pressure reducing means which will discharge the fluid from the pressure-reduced area 50 and reduce the internal pressure of the pressure-reduced area 50. An air discharge pump or an ejector, among others, may be used when the afore-mentioned device is used in the air, and a drainage pump, among others, may be used when the afore-mentioned device is used underwater.

The two suction disk units 201 and 202 are linked to each other via a reciprocating actuator unit.

If the moving direction of the device is provided for the right in Fig. 1, the reciprocating actuator unit is composed of a left side reciprocating actuator unit which is arranged left toward the direction where the device is moved, a right side reciprocating actuator unit which is arranged right toward the direction where the device is moved, and a rod case unit connecting means which connects two rod case units. Each of the rod case units is arranged in a central part of each reciprocating actuator unit.

The left side reciprocating actuator unit is composed of two air cylinder 7b, 7a and a middle joint part 71 which is placed between two air cylinders and fixed.

The left side rod case unit is composed of a cylinder case of the air cylinder 7b, a cylinder case of the air cylinder 7a and the middle joint part 71.

Each reciprocating rod is composed of a piston of each air cylinder and a piston rod of each air cylinder.

Each end of the reciprocating rods is connected to each left side of the suction disk unit 202, 201 via rod end 9 which is a kind of universal joint.

The right side reciprocating actuator unit is composed of two air cylinder 8b, 8a and a middle joint part 81 which is placed between two air cylinders and fixed.

The right side rod case unit is composed of a cylinder case of the air cylinder 8b, a cylinder case of the air cylinder 8a and the middle joint part 81.

Each reciprocating rod is composed of a piston of each air cylinder and a piston rod of each air cylinder.

Each end of the reciprocating rods is connected to each right side of the suction disk unit 202, 201 via a rod end 9 which is a kind of universal joint.

It equips with a penetration hole respectively, a connecting rod 11 that the rigidity is large penetrates to the penetration holes through the middle joint part 71 and the middle joint part 81, and the connecting rod is installed in a free sliding. The connecting rod 11 composes the rod case unit connecting means. The rod case unit connecting means is restricted so that a relative position of the right and left reciprocating actuators should not change in the parallel direction where the device is moved.

That is, the relative position of the right and left reciprocating actuators is changed only in the two parallel respects, and the two parallel respects and the connecting rod 11 are always orthogonal each other.

Although not illustrated, these four air cylinders 7b, 7a, 8b, 8a are operated respectively independently, and are connected to a pressured air source via an appropriate air pressure channel.

Suction disk unit 201,202 has a negative pressure regulating valve unit 10 respectively.

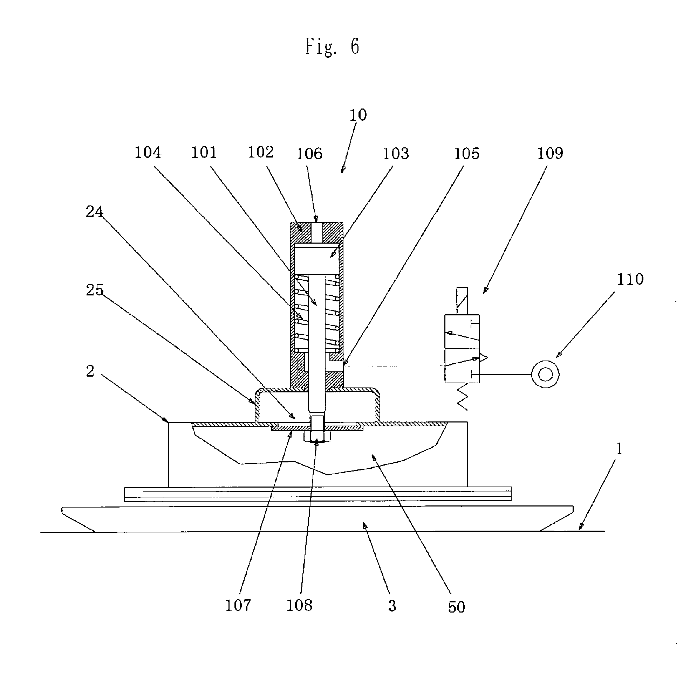

In Fig. 6, the negative pressure regulating valve unit is being composed of a single air cylinder which is composed of a piston rod 101, a cylinder case 102, a piston 103, a coil spring 104 which shrinks the piston rod 101, an air supply port 105 and an air supply port 106;

a cylinder case hold plate 25 which fixes the cylinder case 102 to the position left a little from the upper surface of the upper plate of the suction housing 2;

a valve hole 24 which is made on the upper plate of the suction housing 2;

a valve plate 107 which closes the valve hole 24;

a nut 108 which fixes the valve plate 107 to the edge of the piston rod 101;

a two positions & three ports solenoid valve 109 which is connected to the air supply port 105 ;

an air compressor 110 ;

an air supply port 106 which is connected with the fluid outside of the device.

Each of the such negative pressure regulating valve unit having two functions that either function can be arbitrarily selected - one of the functions obstructs the increase of the vacuum level of the suction disk unit 201 or 202 by making an outside fluid flow in the unit when the vacuum level in the unit increases more than the preset low vacuum level, the other function increases the vacuum level in the suction disk unit 201 or 202 by obstructing the inflow of an outside fluid when the vacuum level in the unit increases more than the preseted low vacuum level, the negative pressure regulating valve unit being selected the function which obstructs the increase of the vacuum level of the suction disk unit 201 or 202 while the suction disk unit 201 or 202 is set at the movable state, the negative pressure regulating valve unit being selected the function which increases the vacuum level of the suction disk unit 201 or 202 while the suction disk unit 201 or 202 is set at the non-movable state.

Each suction disk unit 201, 202 is equipped with three air cylinders 6a, 6b.

The air cylinders 6a, 6b are fixed on the upper plate of the suction housing 2, the piston rods of the air cylinders 6a, 6b penetrate through the upper plate and is thrust out to the pressure-reduced area 50.

The air cylinders 6a or 6b are the model from which the relative rotation of the piston rod is obstructed for the cylinder case.

Each end of the piston rods is equipped with a stopper 4a which is made from the material that coefficient of friction such as polyurethane is large.

When the piston rod is extended and the stopper 4a is pressed strongly to the surface, the suction disk unit 201 becomes at non-movable state.

Although not illustrated, these air cylinders are connected to an air compressor via an appropriate air pressure channel so that the air cylinders 6a can operate the extension or the shrinkage of the piston rods at the same time and arbitrariness.

Each end of the piston rods is equipped with a stopper 4b which is made from the material that coefficient of friction such as polyurethane is large.

When the piston rod is extended and the stopper 4b is pressed strongly against the surface, the suction disk unit 202 becomes at non-movable state.

Although not illustrated, these air cylinders are connected to an air compressor via an appropriate air pressure channel so that the air cylinders 6b can operate the extension or the shrinkage of the piston rods at the same time and arbitrariness. Each suction disk unit 201, 202 is equipped with the ball casters 5a, 5b under the upper plate of the suction housing 2 in the pressure-reduced area 50.

The suction disk unit 201 becomes at movable state when a ball of the ball casters 5a is pressed strongly against the surface by being extended the piston rod of the air cylinder 6a and being reduced the frictional force between the suction disk unit 201 and the surface.

The suction disk unit 202 becomes at movable state when a ball of the ball casters 5b is pressed strongly against the surface by being extended the piston rod of the air cylinder 6b and being reduced the frictional force between the suction disk unit 202 and the surface.

The device described above the embodiment example of the first invention of the present invention with reference to Fig. 1 through Fig. 6, has the total system such as an example of the system showed in Fig. 7.

The system is composed of a main unit which is equipped with the suction disk unit 201, 202 and adhere to the surface of an object 1; a root's type vacuum pump 96 as the pressure reducing means; a long suction hose 951 which connects the pipe fitting 23 of the suction disk unit 201 and a valve unit 91; a short piping 952 which connects the valve unit 91 and the root's type vacuum pump 96; a pressure gage Pe1 which is arranged on the downstream side of the pipe fitting 23; a pressure gage Pc1 which is arranged on the upstream side of the valve unit 91; a pressure gage Pb which is arranged on the upstream side of an fluid inlet 954 of the root's type vacuum pump 96; a long suction hose 951 which connects the pipe fitting 23 of the suction disk unit 202 and a valve unit 91; a short piping 952 which connects the valve unit 91 and the root's type vacuum pump 96; a pressure gage Pe2 which is arranged on the downstream side of the pipe fitting 23; and a pressure gage Pc2 which is arranged on the upstream side of the valve unit 91.

In Fig. 7, the state on the surface of the surface of an object1 is smooth, the valve of the negative pressure regulating valve unit of the suction disk unit 201 is strongly shut to maintain the vacuum level of pressure-reduced area to high vacuum level, the valve of the negative pressure regulating valve unit of the suction disk unit 202 is opened to maintain the vacuum level of pressure-reduced area to low vacuum level. The valve unit 91 is composed of the well-known throttle valves or the well-known orifices.

Each sign that shows each above-mentioned pressure gage displays the absolute pressure value of the each pressure gage.

The sign of the valve shown by figure 90 displays the existence of big passage resistance on the way of suction hose 951, it originates in the very long length of the suction hose 951.

Thought the embodiment example of the device may break out on an atmospheric inside, in the explanation of these embodiment examples of the present invention being described here, the device is assumed to break out in a very shallow area under the surface of the water - the absolute pressure of the water is 1.03 kgf/cm2.

In the explanation of the embodiment examples of the present invention, maximum suction pressure of the suction pump 96 is assumed to be 0.35 kgf/cm2 as the absolute pressure, the water volume of the suction pump 96 is assumed to be Qm3/s, the pressure loss (Rv kgf/cm2) - which is caused by the passage resistance when the water of Q m3/s passes trough the valve unit 91 - is assumed to be 0.38 kgf/cm2 as the absolute pressure, and the pressure loss (Rh kgf/cm2) - which is caused by the passage resistance when the water of Q m3/s passes trough the suction hose 951 - is assumed to be 0.30 kgf/cm2 as the absolute pressure,

The operation and effects of the embodiment example of the device of the first invention afore-described will be explained bellow.

First of all, the operation and effects of the embodiment example of the device of the first invention afore-described will be explained bellow with reference to Fig. 7.

When the suction pump 96 operates, the water of Qm3/s that suction pump 96 sucks is inhaled only from the valve hole of the negative pressure regulating valve unit of the suction disk unit 202 because the valve of the negative pressure regulating valve unit of the suction disk unit 201 is strongly shut, and water arrives at suction pump 96 by passing suction hose 951 and the valve unit 91, and is exhausted outside next at the end.

The value of each pressure gage that breaks out on the way from suction disk unit 202 at this time to suction pump 96 is the following and the melons.

$$Pe2 = 1.03 \ (\text{kgf/cm2})$$

$$Pc2 = Pe2 - Rh = 1.03 - 0.30 = 0.73 \ (\text{kgf/cm2})$$

$$P\ b = P\ c\ 2 - R\ v = 0.73 - 0.38 = 0.35 \ (kgf/cm2)$$

The value of each pressure gage that breaks out on the way from suction disk unit 201 at this time to suction pump 96 is the following and the melons.

$$P\ e\ 1 = P\ c\ 1 = P\ b = 0.35 \ (kgf/cm2)$$

That is, the pressure loss doesn't occur in the part from suction disk unit 201 to suction pump 96 in suction hose 951 and the valve unit 91 because the flow of the fluid is not generated.

That is, the pressure in the suction disk unit 201 becomes minimum pressure as the pressure in the suction disk unit 201 and the pressure of the suction inlet 954 of the suction pump 96 become almost the same pressures.

Thus, the adsorption power that suction disk unit 201 adsorbs the surface of an object1 becomes the maximum.

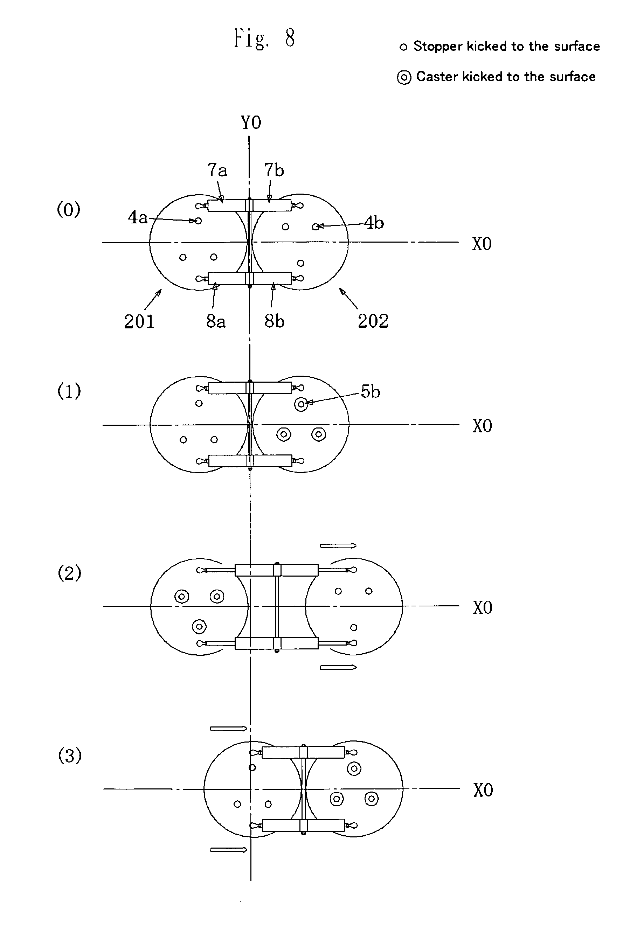

Next, the operation and effects of the embodiment example of the device of the first invention afore-described in Fig. 1 through Fig. 6 will be explained bellow with reference to Fig. 8.

Fig. 8 through Fig. 10 are illustrations showing the procedures and states of the device shown in Fig. 1 through Fig. 6 moving straight ahead toward the right direction in the figures of Fig. 8 through Fig. 10.

The device of Fig. 8 through Fig. 10 shows the device that makes the device of Figure 1 an imitation type.

The axis of coordinate X0 and Y0 are drawn as an index to understand the operation situation when the device moves.

In the illustrations shows the movement procedures of the device in Fig. 8 through Fig. 10, each state of the device shows the state wherein each movement of the device is just finished and the next movement is just started, and the fat arrow shows the direction of the movement wherein each movement is just finished.

In Fig. 8 through Fig. 10, the single circle shows stopper 4a and 4b, and the double circle shows ball caster 5a and 5b.

The stopper 4a of the suction disk unit 201 projects and is kicked to the surface 1.

The stopper 4b of the suction disk unit 202 projects and is kicked to the surface 1.

The valve of the negative pressure regulating valve unit of the suction disk unit 201 is opened.

The valve of the negative pressure regulating valve unit of the suction disk unit 202 is opened.

and each piston rod of the air cylinder 7a, 7b, 8a, 8b is withdrawn.

The device in Fig. 8 (0) shows an original position and original posture of the device.

In the original position and original posture of the device;

the stopper 4a of the suction disk unit 201 projects and is kicked to the surface 1,

the stopper 4b of suction disk unit 202 projects and is kicked to the surface1,

the valve of the negative pressure regulating valve unit of the suction disk unit 201 is opened,

the valve of the negative pressure regulating valve unit of the suction disk unit 202 is opened,

and each piston rod of the air cylinder 7a, 7b, 8a, 8b is withdrawn.

Because the pressure-reduced area 50 of the suction disk unit 201, 202 is decompressed when the pressure reducing means begins driving in such a state, suction disk unit 201, 202 adhere to the surface 1.

At this time, the differential pressure is generated between the fluid pressure outside of the device and the fluid pressure of the pressure-reduced area 50, and the adsorption power that originates in this differential pressure is transmitted to the surfce1 through the stopper 4a, 4b.

The device in Fig. 8 (1) shows a position and a posture of the device wherein;

the stopper 4a of the suction disk unit 201 projects and is kicked to the surface 1,

the stopper 4b of the suction disk unit 202 is withdrawn,

the ball caster 5b of the suction disk unit 202 is kicked to the surface 1,

the valve of the negative pressure regulating valve unit of the suction disk unit 201 is closed and the vacuum level of the suction disk unit 201 is at high level,

the valve of the negative pressure regulating valve unit of the suction disk unit 202 is opened and the vacuum level of the suction disk unit 202 is at low level,

and each air cylinder 7a, 7b, 8a, 8b is withdrawn.

In such a state, the suction disk unit 202 moves right when each piston rod of the air cylinder 7a, 7b, 8a, 8b is extended.

(1) of Fig. 8 shows the state immediately before the suction disk unit 202 moves right in the figure.

The device in Fig. 8 (2) shows a position and a posture of the device wherein;

the stopper 4a of the suction disk unit 201 is withdrawn,

the ball caster 5a of the suction disk unit 201 is kicked to the surface 1,

the stopper 4b of the suction disk unit 202 projects and is kicked to the surface 1,
the valve of the negative pressure regulating valve unit of the suction disk unit 201 is opened and the vacuum level of the suction disk unit 201 is at low level,
the valve of the negative pressure regulating valve unit of the suction disk unit 202 is closed and the vacuum level of the suction disk unit 202 is at high level,
and each air cylinder 7a, 7b, 8a, 8b is extended.
When the air cylinder 7a, 7b, 8a, 8b is withdrawn in such a state, the suction disk unit 201 moves right in the figure.

(2) of Fig. 8 shows the state immediately before the suction disk unit 201 moves right in the figure.

The device in Fig. 8 (3) shows a position and a posture of the device wherein;
the stopper 4a of the suction disk unit 201 projects and is kicked to the surface 1,
the stopper 4b of the suction disk unit 202 is withdrawn,
the ball caster 5b of the suction disk unit 202 is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and each piston rod of the air cylinder 7a, 7b, 8a, 8b is withdrawn.
When the air cylinder 7a, 7b, 8a, 8b is extended in such a state, the suction disk unit 202 moves right in the figure.

(3) of Fig. 8 shows the state immediately before the suction disk unit 202 moves right in the figure.

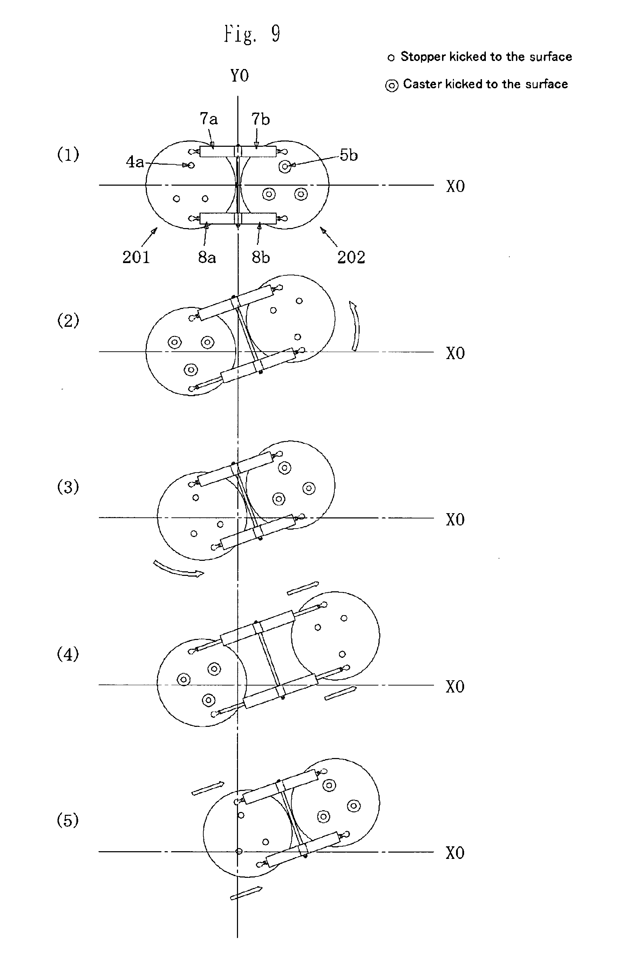

Hereafter, the device does the straight advancement movement right repeating the operation of mentioning above.
Next, the movement procedure of the embodiment example of the device of the first invention afore-described in Fig. 1 through Fig. 6 will be explained bellow with reference to Fig. 9 when the device travels toward the upper right direction in Fig. 9.
The device in Fig. 9 (1) shows a position and a posture of the device wherein;
the stopper 4a of the suction disk unit 201 projects and is kicked to the surface 1,
the stopper 4b of the suction disk unit 202 is withdrawn,
the ball caster 5b of the suction disk unit 202 is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and each piston rod of the air cylinder 7a, 7b, 8a, 8b is withdrawn.
When the air cylinder 8a is extended in such a state, the suction disk unit 202 swings upper right in the figure.

(1) of Fig. 9 shows the state immediately before the suction disk unit 202 swings upper right in the figure.

The device in Fig. 9 (2) shows a position and a posture of the device wherein;
the stopper 4a of the suction disk unit 201 is withdrawn,
the ball caster 5a of the suction disk unit 201 is kicked to the surface 1,
the stopper 4b of the suction disk unit 202 projects and is kicked to the surface 1,
the valve of the negative pressure regulating valve unit of the suction disk unit 201 is opened and the vacuum level is at low level,
the valve of the negative pressure regulating valve unit of the suction disk unit 202 is closed and the vacuum level is at high level,
and the air cylinder 8a is extended.
When the air cylinder 8a is withdrawn in such a state, the suction disk unit 201 rotates counterclockwise in the figure.

(2) of Fig. 9 shows the state immediately before the suction disk unit 201 rotates counterclockwise in the figure.

The device in Fig. 9 (3) shows a position and a posture of the device wherein; the stopper 4a of the suction disk unit 201 projects and is kicked to the surface 1,
the stopper 4b of the suction disk unit 202 is withdrawn,
the ball caster 5b of the suction disk unit 202 is kicked to the surface 1,
the valve of the negative pressure regulating valve unit of the suction disk unit 201 is closed and the vacuum level is at high level,

the valve of the negative pressure regulating valve unit of the suction disk unit 202 is opened and the vacuum level is at low level,

and each piston rod of the air cylinder 7a, 7b, 8a, 8b is withdrawn.

When the air cylinder 7a, 7b, 8a, 8b is extended in such a state, the suction disk unit 202 moves upper right in the figure.

(3) of Fig. 9 shows the state immediately before the suction disk unit 202 moves upper right in the figure.

The device in Fig. 9 (4) shows a position and a posture of the device wherein;

the stopper 4a of the suction disk unit 201 is withdrawn,

the ball caster 5a of the suction disk unit 201 is kicked to the surface 1,

the stopper 4b of the suction disk unit 202 projects and is kicked to the surface 1,

the valve of the negative pressure regulating valve unit of the suction disk unit 201 is opened and the vacuum level is at low level,

the valve of the negative pressure regulating valve unit of the suction disk unit 202 is closed and the vacuum level is at high level,

and each air cylinder 7a, 7b, 8a, 8b is extended.

When the air cylinder 7a, 8a is withdrawn in such a state, the suction disk unit 201 moves upper right in the figure.

(4) of Fig. 9 shows the state immediately before the suction disk unit 201 moves upper right in the figure.

The device in Fig. 9 (5) shows a position and a posture of the device wherein;

the stopper 4a of the suction disk unit 201 projects and is kicked to the surface 1,

the stopper 4b of the suction disk unit 202 is withdrawn,

the ball caster 5b of the suction disk unit 202 is kicked to the surface 1,

the valve of the negative pressure regulating valve unit of the suction disk unit 201 is closed and the vacuum level is at high level,

the valve of the negative pressure regulating valve unit of the suction disk unit 202 is opened and the vacuum level is at low level,

and each piston rod of the air cylinder 7a, 7b, 8a, 8b is withdrawn.

When the air cylinder 7a, 7b, 8a, 8b is withdrawn in such a state, the suction disk unit 201 moves upper right in the figure.

(5) of Fig. 9 shows the state immediately before the suction disk unit 201 moves upper right in the figure.

Hereafter, the device does the straight advancement movement upper right repeating the operation of mentioning above.

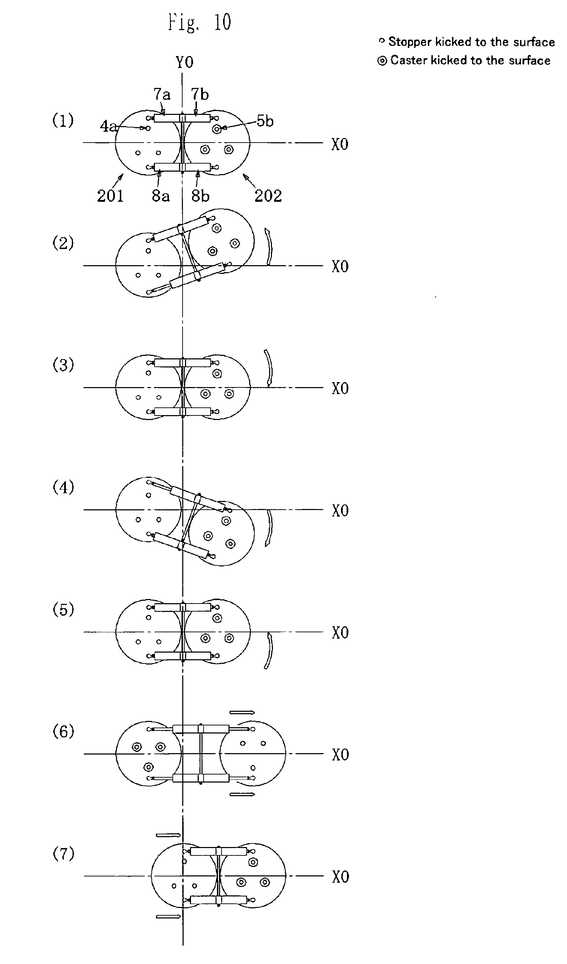

The movement procedure of the embodiment example of the device of the first invention afore-described in Fig. 1 through Fig. 6 will be explained bellow with reference to Fig. 10; wherein the suction disk unit 202 swings toward the upper right direction, next it swings toward the lower right direction to return to the original state, next it swings toward the lower right direction, next it swings toward the upper right direction to return to the original state, next it travels toward the right direction in Fig. 10.

The device in Fig. 10 (1) shows a position and a posture of the device wherein;

the stopper 4a of the suction disk unit 201 projects and is kicked to the surface 1,

the stopper 4b of the suction disk unit 202 is withdrawn,

the ball caster 5b of the suction disk unit 202 is kicked to the surface 1,

the valve of the negative pressure regulating valve unit of the suction disk unit 201 is closed and the vacuum level is at high level,

the valve of the negative pressure regulating valve unit of the suction disk unit 202 is opened and the vacuum level is at low level,

and each piston rod of the air cylinder 7a, 7b, 8a, 8b is withdrawn.

When the air cylinder 8a is extended in such a state, the suction disk unit 202 moves upper right in the figure.

(1) of Fig. 10 shows the state immediately before the suction disk unit 202 moves upper right in the figure.

The device in Fig. 10 (2) shows a position and a posture of the device wherein; the stopper 4a of the suction disk unit 201 projects and is kicked to the surface 1,

the stopper 4b of the suction disk unit 202 is withdrawn,

the ball caster 5b of the suction disk unit 202 is kicked to the surface 1,

the valve of the negative pressure regulating valve unit of the suction disk unit 201 is closed and the vacuum level is at high level,
the valve of the negative pressure regulating valve unit of the suction disk unit 202 is opened and the vacuum level is at low level,
and each air cylinder 8a is extended.
When the air cylinder 8a is withdrawn in such a state, the suction disk unit 202 swings lower right in the figure.

(2) of Fig. 10 shows the state immediately before the suction disk unit 202 moves lower right in the figure.

The device in Fig. 10 (3) shows a position and a posture of the device wherein;
the stopper 4a of the suction disk unit 201 projects and is kicked to the surface 1,
the stopper 4b of the suction disk unit 202 is withdrawn,
the ball caster 5b of the suction disk unit 202 is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and each piston rod of the air cylinder 7a, 7b, 8a, 8b is withdrawn.
When the air cylinder 7a is extended in such a state, the suction disk unit 202 swings lower right in the figure.

(3) of Fig. 10 shows the state immediately before the suction disk unit 202 moves lower right in the figure.

The device in Fig. 10 (4) shows a position and a posture of the device wherein;
the stopper 4a of the suction disk unit 201 projects and is kicked to the surface 1,
the stopper 4b of the suction disk unit 202 is withdrawn,
the ball caster 5b of the suction disk unit 202 is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and each air cylinder 7a is extended.
When the air cylinder 7a is withdrawn in such a state, the suction disk unit 202 swings upper right in the figure.

(4) of Fig. 10 shows the state immediately before the suction disk unit 202 swings upper right in the figure.

The device in Fig. 10 (5) shows a position and a posture of the device wherein;
the stopper 4a of the suction disk unit 201 projects and is kicked to the surface 1,
the stopper 4b of the suction disk unit 202 is withdrawn,
the ball caster 5b of the suction disk unit 202 is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and each air cylinder 7a, 7b , 8a, 8b is withdrawn.
When the air cylinder 7a, 7b, 8a, 8b is extended in such a state, the suction disk unit 202 moves right in the figure.

(5) of Fig. 10 shows the state immediately before the suction disk unit 202 moves right in the figure.

The device in Fig. 10 (6) shows a position and a posture of the device wherein;
the stopper 4a of the suction disk unit 201 is withdrawn,
the ball caster 5a is kicked to the surface,
the stopper 4b of the suction disk unit 202 projects and is kicked to the surface 1,
the valve of the negative pressure regulating valve unit of the suction disk unit 201 is opened and the vacuum level is low level,
the valve of the negative pressure regulating valve unit of the suction disk unit 202 is closed and the vacuum level is at high level,
and each air cylinder 7a, 7b, 8a, 8b is extended.
When the air cylinder 7a, 8a is withdrawn in such a state, the suction disk unit 201 moves right in the figure.

(6) of Fig. 10 shows the state immediately before the suction disk unit 201 moves right in the figure.

The device in Fig. 10 (7) shows a position and a posture of the device wherein;
the stopper 4a of the suction disk unit 201 projects and is kicked to the surface 1,
the stopper 4b of the suction disk unit 202 is withdrawn,
the ball caster 5b of the suction disk unit 202 is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and each piston rod of the air cylinder 7a, 7b, 8a, 8b is withdrawn.
When the air cylinder 7a, 7b, 8a, 8b is withdrawn in such a state, the suction disk unit 201 moves right in the figure.

(7) of Fig. 10 shows the state immediately before the suction disk unit 201 moves right in the figure.

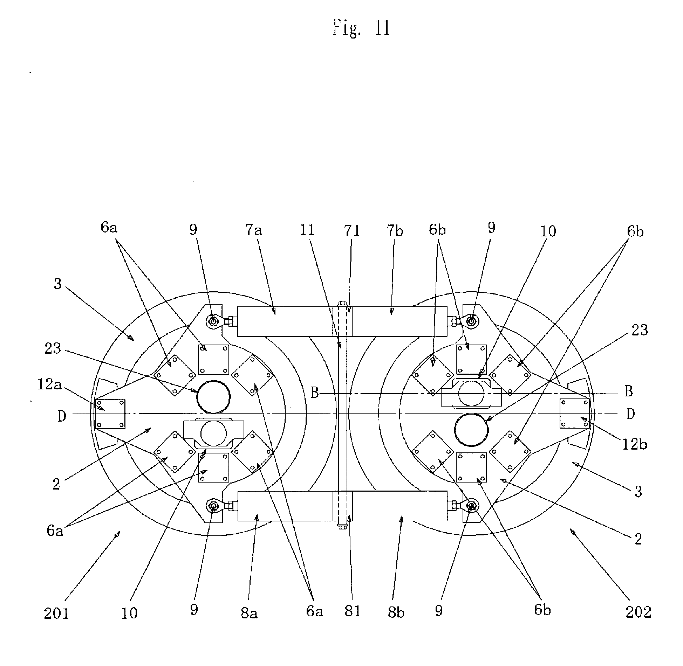

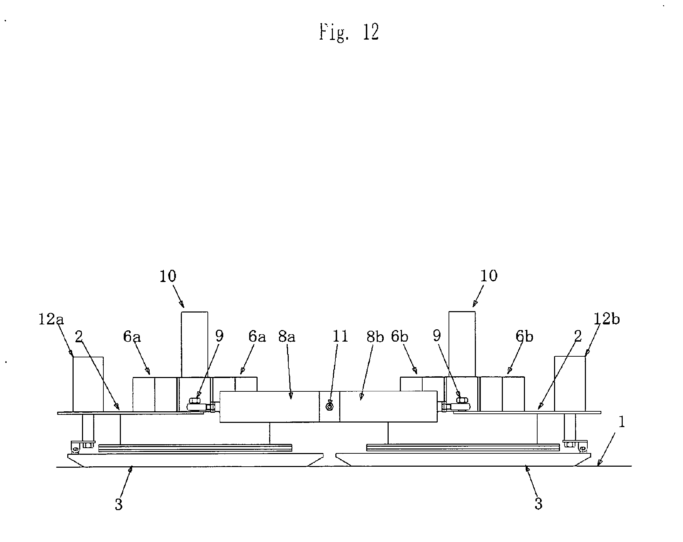

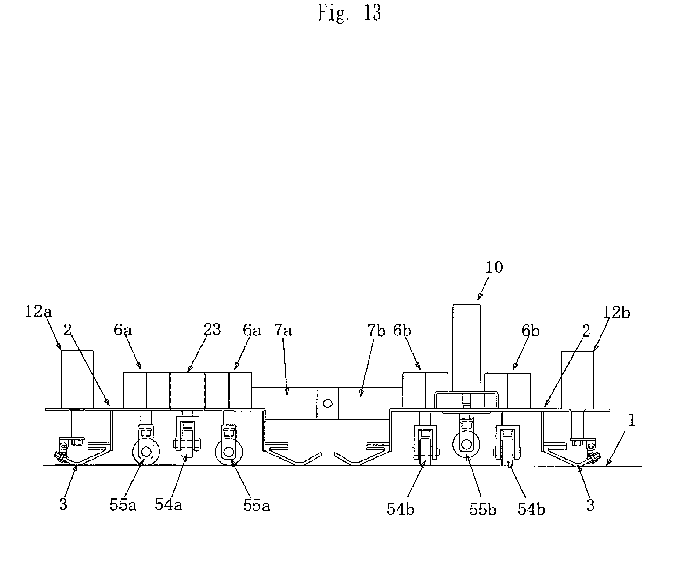

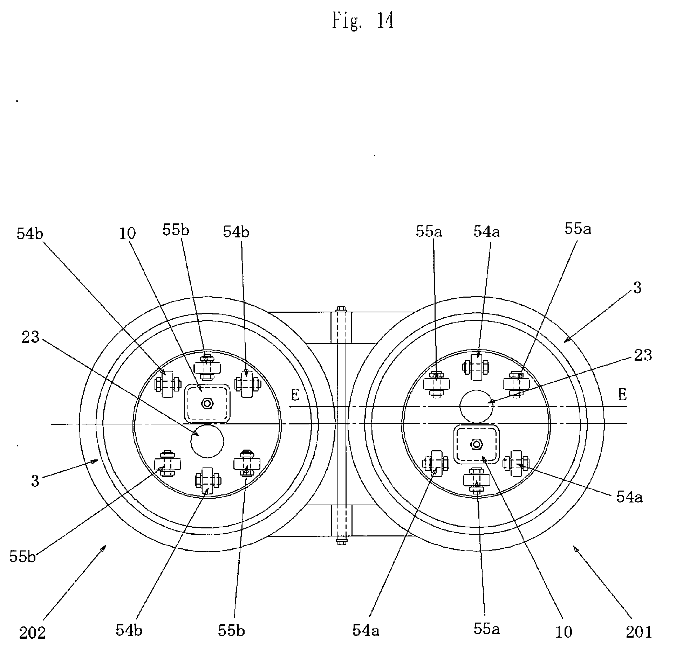

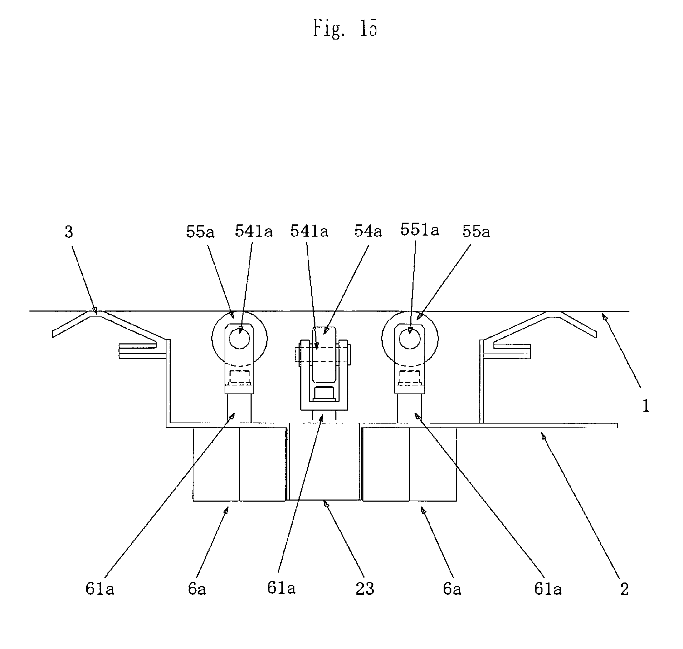

Hereafter, the suction disk unit 202 travels toward the right direction swinging by repeating the operation described above at (2) through (7) in Fig. 10.
The first invention of the inventions afore-described brings an effect that one suction disk unit at movable state is moved easily and surely in the aimed direction by using the other suction disk unit at non-movable state of which function is as a kick foot which adheres to the surface strongly. The effect is brought by a rapid increase of the vacuum level of the suction disk at non-movable state compared with the vacuum level of the suction disk at movable state.
The rapid increase of the vacuum level is brought by the equipment of each suction disk unit of the negative pressure regulating valve unit with a function to selectively control the vacuum level of each suction disk unit.
Further, the first invention of the inventions afore-described brings another effect that one suction disk unit at moving state is swung easily and surely in the aimed direction by using the reciprocating actuator unit described above which connects two sets of suction disk units.
The effect originates in increase of strength of mechanism of the reciprocating actuator unit that transmits swing power. The reciprocating actuator unit comprises a left side reciprocating actuator, a right side reciprocating actuator, and a connection means for the rod case units of the reciprocating actuators.
The increase of strength of the mechanism originates in the restriction power of the connection means restricted so that a relative position of the right reciprocating actuator and the left reciprocating actuator should not change in a parallel direction in the direction where the device is moved.
The increase of the above-mentioned swing power increases the effect of the suction disk unit as the kick foot further.
The first invention of the inventions afore-described brings the effects as follows.
First, this invention provides a device which has improved movement performance that originates in the minimum small steer radius and in the easy turn in the place.
Second, this invention provides a device controlled like mind which has improved control performance that originates in the improving reproducibility of the steer movement of the device.
Third, this invention provides a device which has high production capacity while vacuum cleaning that originates in the increase of the cleaning width of the suction disk units. The increase of the cleaning width of the disks is caused by swinging of the disks.
Fourth, this invention provides a device which can travel on the surface even if the oil slick adheres to the surface. The function originates in the increase of the driving power of the device that is caused by the increase of the friction between the surface and the suction disk unit at non-movable state.
The embodiment example of the device of the first invention was explained above.
Next, the embodiment example of the device of the second invention will be explained bellow with reference to Fig. 11 through Fig. 15.
Because it is a common one to the embodiment example of the first invention and the embodiment example of the second invention, the explanation is omitted about the device such as the reciprocating actuator and the negative pressure regulating valve unit shown in Fig. 1 through Fig. 6, and the total system shown in Fig. 7.
With reference to Fig 11 through Fig. 15, the device has two suction disk units 201 and 202.
The suction disk units 201 and 202 have the suction housing 2 made of a rigid or semi-rigid material such as steel. The suction housing 2 may be of any appropriate shape, but the embodiment example illustrated herein has the shape of a roughly cylindrical-shaped box with a circular shaped plate welded around the opening thereof facing the surface 1.
The suction housing 2 may be of any appropriate shape, but the embodiment example illustrated herein has the shape of a roughly cylindrical-shaped box with a circular shaped plate welded around the opening thereof facing the surface 1.
The circular shaped plate has a vacuum sealing member 3 arranged thereon. The vacuum sealing member 3 has the shape and construction of a mount linked to the circular shaped plate, a ring-shaped lip kept in contact with the surface 1. In the embodiment example, the vacuum sealing member 3 defines a pressure-reduced area 50 jointly with the suction housing 2 and the surface 1.

The vacuum sealing member 3 is made of a non-gas-permeable and relatively soft material, such as polyurethane rubber, and therefore flexes and changes its shape with relatively little force, thereby changing the shape freely following the unevenness of the surface 1.

The pressure-reduced area 50 defined by the suction housing 2, the surface 1 and the vacuum sealing member 3 is connected to a pressure reducing means as illustrated in Fig. 7.

The other end of the flexible suction hose 951 is connected to the pressure reducing means 96. The pressure reducing means 96 may be any well-known pressure reducing means which will discharge the fluid from the pressure-reduced area 50 and reduce the internal pressure of the pressure-reduced area 50.

An air discharge pump or an ejector, among others, may be used when the afore-mentioned device is used in the air, and a drainage pump, among others, may be used when the afore-mentioned device is used underwater.

Each suction disk unit 201, 202 is equipped with three air cylinders 6a, 6b.

The air cylinders 6a, 6b are fixed on the upper plate of the suction housing 2, the piston rods of the air cylinders 6a, 6b penetrate through the upper plate and is thrust out to the pressure-reduced area 50.

Each air cylinder 6a, 6b is a model from which the relative rotation of the piston rod is obstructed for the cylinder case. The second device of this invention is equipped with two types of wheels, i.e., one having a rotating shaft parallel with the moving direction of the device - the parallel wheel unit - and the other having a rotating shaft orthogonal to the moving direction - the orthogonal wheel unit - are fitted to the suction disk units, and these two types of wheels are selectively pressed against the surface of the object according to the shape of the device for each time series when the device performs steering operation.

Each end of three piston rods is equipped with a wheel 54a having a rotating shaft parallel with the moving direction of the device - the parallel wheel unit, and each of the other three piston rods is equipped with a wheel 55a having a rotating shaft orthogonal to the moving direction - the orthogonal wheel unit.

Although not illustrated, these three air cylinders 6a with the parallel wheel unit 54a are connected to a compressor via an appropriate air pressure channel so that the air cylinders 6a can operate the extension or the shrinkage of the piston rods at the same time and arbitrariness.

Although not illustrated, these three air cylinders 6a with the orthogonal wheel unit 55a are connected to a compressor via an appropriate air pressure channel so that the air cylinders 6a can operate the extension or the shrinkage of the piston rods at the same time and arbitrariness.

Each end of three piston rods is equipped with a wheel 54b having a rotating shaft parallel with the moving direction of the device - the parallel wheel unit, and each of the other three piston rods is equipped with a wheel 55b having a rotating shaft orthogonal to the moving direction - the orthogonal wheel unit.

Although not illustrated, these three air cylinders 6b with the parallel wheel unit 54b are connected to a compressor via an appropriate air pressure channel so that the air cylinders 6b can operate the extension or the shrinkage of the piston rods at the same time and arbitrariness.

Although not illustrated, these three air cylinders 6b with the orthogonal wheel unit 55b are connected to a compressor via an appropriate air pressure channel so that the air cylinders 6b can operate the extension or the shrinkage of the piston rods at the same time and arbitrariness.

The operation and effects of the embodiment example of the device of the second invention afore-described will be explained bellow.

The difference point of the embodiment example of the device of the second invention described above and the embodiment example of the device of the first invention described above is in the steering mechanism.

Three embodiment examples of the steering mechanism of the second invention will be explained bellow.

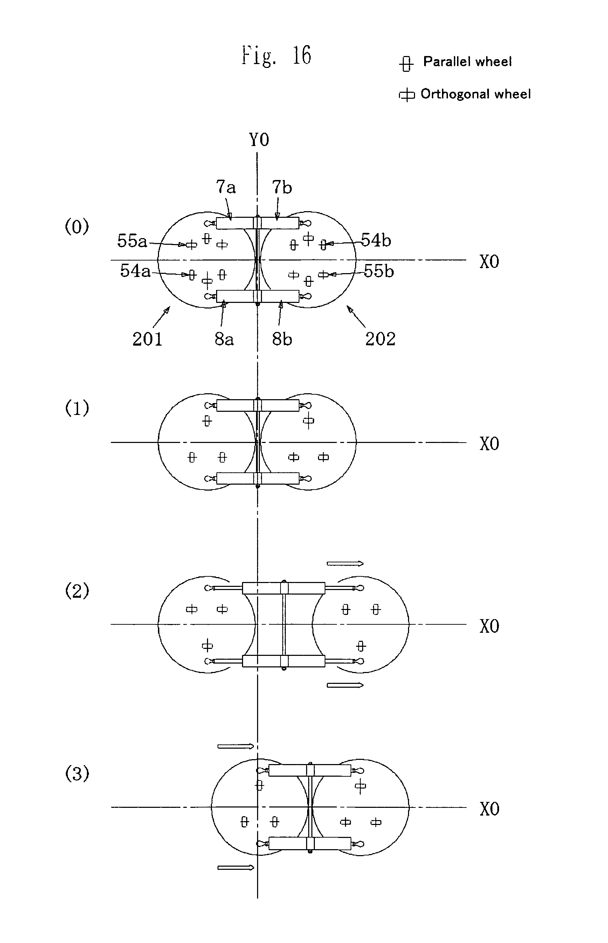

The Fig. 16 through Fig. 18 shows the first steering mechanism of the second invention.

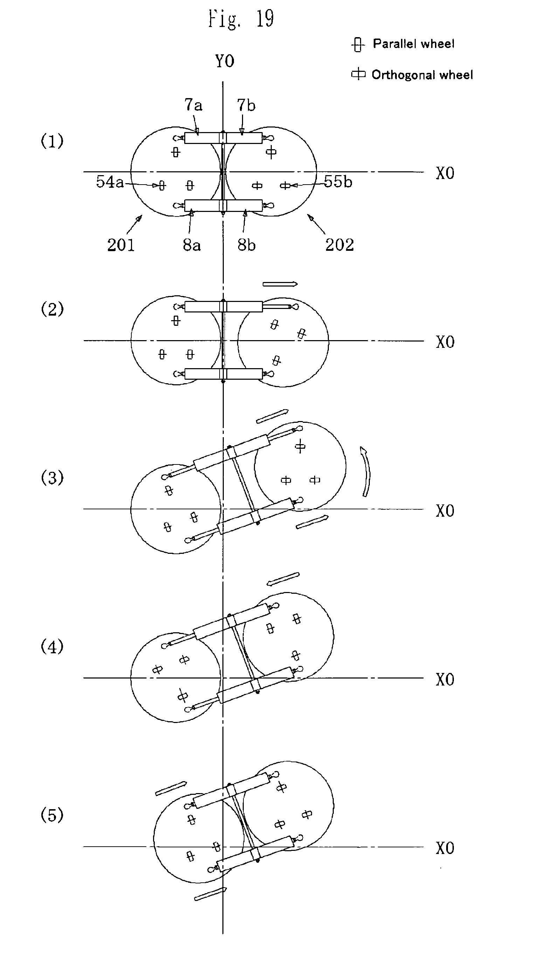

The Fig. 19 shows the second steering mechanism of the second invention.

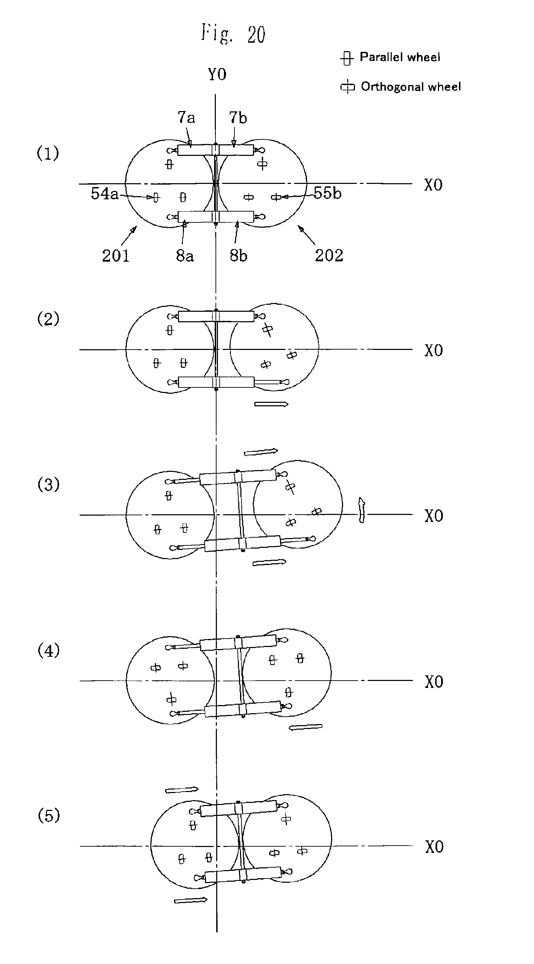

The Fig. 20 shows the third steering mechanism of the second invention.

First of all, the operation and effects of the embodiment example of the device of the second invention afore-described in Fig. 11 through Fig. 15 will be explained bellow with reference to Fig. 16.

Fig. 16 through Fig. 20 are illustrations showing the procedures and states of the embodiment example of the device of the second invention shown in Fig. 11 through Fig. 15 traveling straight ahead toward the right direction in the figures of Fig. 16 through Fig. 20.

The device of Fig. 16 through Fig. 20 shows the device that makes the device of Figure 11 an imitation type.

The axis of coordinate X0 and Y0 are drawn as an index to understand the operation situation when the device moves.

In the illustrations shows the movement procedures of the device in Fig. 16 through Fig. 20, each state of the device shows the state wherein each movement of the device is just finished and the next movement is just started.

The sign of θ shows the parallel wheel unit 54a, 54b in Fig. 16 through Fig. 20, the sign of Φ shows the orthogonal wheel unit 55a, 55b.

The device in Fig. 16 (0) shows an original position and original posture of the device.
In the original position and original posture of the device;
the parallel wheel unit 54a of the suction disk unit 201 projects and is kicked to the surface 1,
the orthogonal wheel unit 55a of the suction disk unit 201 projects and is kicked to the surface 1,
the parallel wheel unit 54b of the suction disk unit 202 projects and is kicked to the surface 1,
the orthogonal wheel unit 55b of the suction disk unit 202 projects and is kicked to the surface 1,
the valve of the negative pressure regulating valve unit of the suction disk unit 201 is opened,
the valve of the negative pressure regulating valve unit of the suction disk unit 202 is opened,
and each piston rod of the air cylinder 7a, 7b, 8a, 8b is withdrawn.
Because the pressure-reduced area 50 of the suction disk unit 201, 202 is decompressed when the pressure reducing means begins driving in such a state, suction disk unit 201, 202 adhere to the surface 1.
At this time, the differential pressure is generated between the fluid pressure outside of the device and the fluid pressure of the pressure-reduced area 50, and the adsorption power that originates in this differential pressure is transmitted to the surfce1 through the parallel wheel unit 54a, 54b and the orthogonal wheel unit 55a, 55b.

The device in Fig. 16 (1) shows a position and a posture of the device wherein;
the orthogonal wheel unit 55a of the suction disk unit 201 is withdrawn,
the parallel wheel unit 54a projects and is kicked to the surface 1,
the parallel wheel unit 54b of the suction disk unit 202 is withdrawn,
the orthogonal wheel unit 55b projects and is kicked to the surface 1,
the valve of the negative pressure regulating valve unit of the suction disk unit 201 is closed and the vacuum level of the suction disk unit 201 is at high level,
the valve of the negative pressure regulating valve unit of the suction disk unit 202 is opened and the vacuum level of the suction disk unit 202 is at low level,
and each air cylinder 7a, 7b, 8a, 8b is withdrawn.
When the air cylinder 7a, 7b, 8a, 8b is extended in such a state, the suction disk unit 202 moves right in the figure.

(1) of Fig. 16 shows the state immediately before the suction disk unit 202 moves right in the figure.

The device in Fig. 16 (2) shows a position and a posture of the device wherein; the parallel wheel unit 54a of the suction disk unit 201 is withdrawn,
the orthogonal wheel unit 55a projects and is kicked to the surface 1,
the orthogonal wheel unit 55b of the suction disk unit 202 is withdrawn,
the parallel wheel unit 54b projects and is kicked to the surface 1,
the valve of the negative pressure regulating valve unit of the suction disk unit 201 is opened and the vacuum level is at low level,
the valve of the negative pressure regulating valve unit of the suction disk unit 202 is closed and the vacuum level is at high level,
and each air cylinder 7a, 7b, 8a, 8b is extended.
When the air cylinder 7a, 7b, 8a, 8b is withdrawn in such a state, the suction disk unit 201 moves right in the figure.

(2) of Fig. 16 shows the state immediately before the suction disk unit 201 moves right in the figure.

The device in Fig. 16 (3) shows a position and a posture of the device wherein;
the orthogonal wheel unit 55a of the suction disk unit 201 is withdrawn,
the parallel wheel unit 54a projects and is kicked to the surface 1,
the parallel wheel unit 54b of the suction disk unit 202 is withdrawn,
the orthogonal wheel unit 55b projects and is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and each piston rod of the air cylinder 7a, 7b, 8a, 8b is withdrawn.
When the air cylinder 7a, 7b, 8a, 8b is extended in such a state, the suction disk unit 202 moves right in the figure.

(3) of Fig. 16 shows the state immediately before the suction disk unit 202 moves right in the figure.

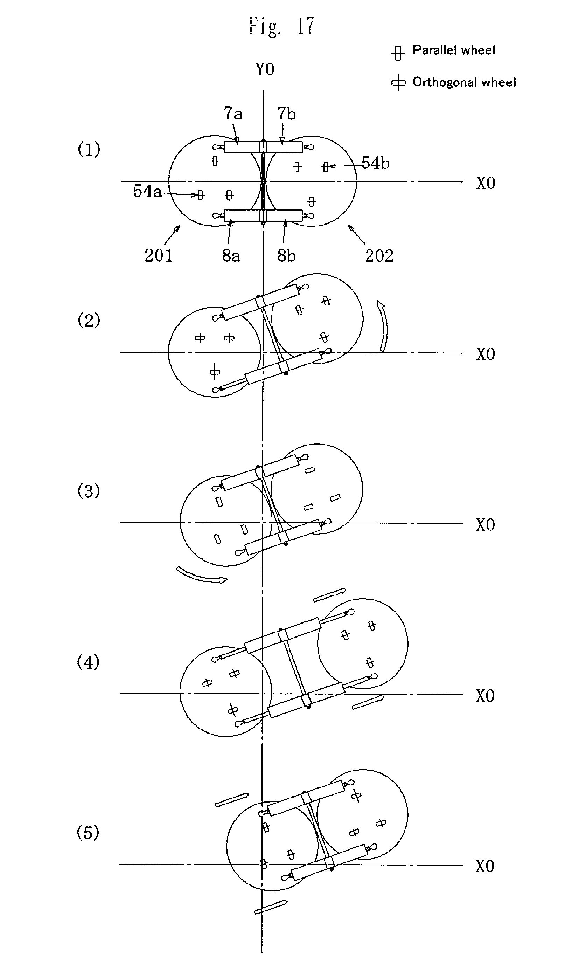

Hereafter, the device does the straight advancement movement right repeating the operation of mentioning above.
Next, the movement procedure of the embodiment example of the device of the second invention afore-described in Fig. 11 through Fig. 15 will be explained bellow with reference to Fig. 17 when the device travels toward the upper right direction in Fig. 17.

The device in Fig. 17(1) shows a position and a posture of the device wherein;

the orthogonal wheel unit 55a of the suction disk unit 201 is withdrawn,

the parallel wheel unit 54a projects and is kicked to the surface 1,

the orthogonal wheel unit 55b of the suction disk unit 202 is withdrawn,

the parallel wheel unit 54b of the suction disk unit 202 projects and is kicked to the surface 1,

the valve of the negative pressure regulating valve unit of the suction disk unit 201 is closed and the vacuum level is at high level,

the valve of the negative pressure regulating valve unit of the suction disk unit 202 is opened and the vacuum level is at low level,

and each piston rod of the air cylinder 7a, 7b, 8a, 8b is withdrawn.

When the air cylinder 8a is extended in such a state, the suction disk unit 202 swings upper right in the figure.

(1) of Fig. 17 shows the state immediately before the suction disk unit 202 swings upper right in the figure.

The device in Fig. 17 (2) shows a position and a posture of the device wherein;

the parallel wheel unit 54a of the suction disk unit 201 is withdrawn,

the orthogonal wheel unit 55a projects and is kicked to the surface 1,

the orthogonal wheel unit 55b of the suction disk unit 202 is withdrawn,

the parallel wheel unit 54b projects and is kicked to the surface 1,

the valve of the negative pressure regulating valve unit of the suction disk unit 201 is opened and the vacuum level is at low level,

the valve of the negative pressure regulating valve unit of the suction disk unit 202 is closed and the vacuum level is at high level,

and each air cylinder 8a is extended.

When the air cylinder 8a is withdrawn in such a state, the suction disk unit 201 rotates counterclockwise in the figure.

(2) of Fig. 17 shows the state immediately before the suction disk unit 201 rotates counterclockwise in the figure.

The device in Fig. 17 (3) shows a position and a posture of the device wherein;

the orthogonal wheel unit 55a of the suction disk unit 201 is withdrawn,

the parallel wheel unit 54a projects and is kicked to the surface 1,

the parallel wheel unit 54b of the suction disk unit 202 is withdrawn,

the orthogonal wheel unit 55b projects and is kicked to the surface 1,

the valve of the negative pressure regulating valve unit of the suction disk unit 201 is closed and the vacuum level is at high level,

the valve of the negative pressure regulating valve unit of the suction disk unit 202 is opened and the vacuum level is at low level,

and each piston rod of the air cylinder 7a, 7b, 8a, 8b is withdrawn.

When the air cylinder 7a, 7b, 8a, 8b is extended in such a state, the suction disk unit 202 moves upper right in the figure.

(3) of Fig. 17 shows the state immediately before the suction disk unit 202 moves upper right in the figure.

The device in Fig. 17 (4) shows a position and a posture of the device wherein;

the parallel wheel unit 54a of the suction disk unit 201 is withdrawn,

the orthogonal wheel unit 55a projects and is kicked to the surface 1,

the orthogonal wheel unit 55b of the suction disk unit 202 is withdrawn,

the parallel wheel unit 54b projects and is kicked to the surface 1,

the valve of the negative pressure regulating valve unit of the suction disk unit 201 is opened and the vacuum level is at low level,

the valve of the negative pressure regulating valve unit of the suction disk unit 202 is closed and the vacuum level is at high level,

and each air cylinder 7a, 7b, 8a, 8b is extended.

When the air cylinder 7a 8a is withdrawn in such a state, the suction disk unit 201 moves upper right in the figure.

(4) of Fig. 17 shows the state immediately before the suction disk unit 201 moves upper right in the figure.

The device in Fig. 17 (5) shows a position and a posture of the device wherein;
the orthogonal wheel unit 55a of the suction disk unit 201 is withdrawn,
the parallel wheel unit 54a projects and is kicked to the surface 1,
the parallel wheel unit 54b of the suction disk unit 202 is withdrawn,
the orthogonal wheel unit 55b projects and is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and each piston rod of the air cylinder 7a, 7b, 8a, 8b is withdrawn.
When the air cylinder 7a, 7b, 8a, 8b is withdrawn in such a state, the suction disk unit 201 moves upper right in the figure.

(5) of Fig. 17 shows the state immediately before the suction disk unit 201 moves upper right in the figure.

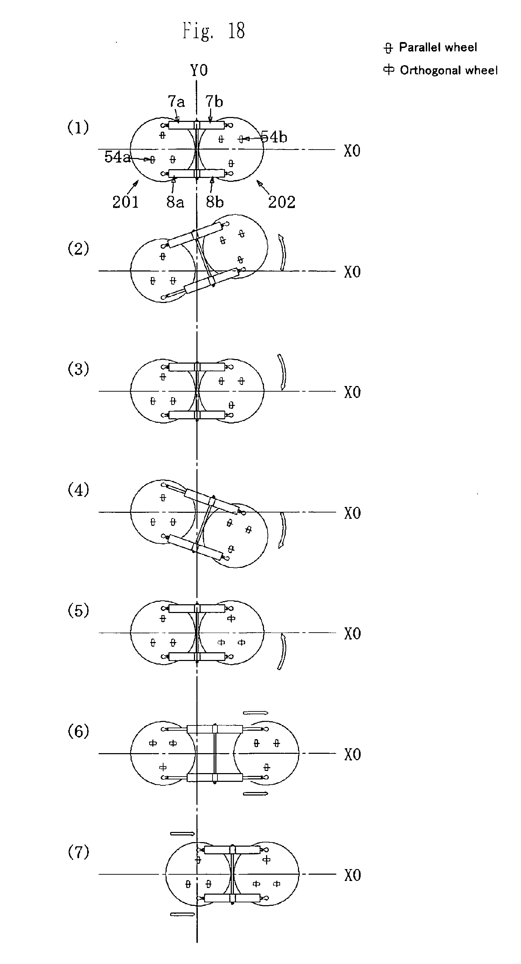

Hereafter, the device does the straight advancement movement right repeating the operation of mentioning above.
The movement procedure of the embodiment example of the device of the second invention afore-described in Fig. 11 through Fig. 15 will be explained bellow with reference to Fig. 18; wherein the suction disk unit 202 swings toward the upper right direction, next it swings toward the lower right direction to return to the original state, next it swings toward the lower right direction, next it swings toward the upper right direction to return to the original state, next it travels toward the right direction in Fig. 18.
The device in Fig. 18 (1) shows a position and a posture of the device wherein;
the orthogonal wheel unit 55a of the suction disk unit 201 is withdrawn,
the parallel wheel unit 54a projects and is kicked to the surface 1,
the orthogonal wheel unit 55b of the suction disk unit 202 is withdrawn,
the parallel wheel unit 54b projects and is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and each piston rod of the air cylinder 7a, 7b, 8a, 8b is withdrawn.
When the air cylinder 8a is extended in such a state, the suction disk unit 202 swings upper right in the figure.

(1) of Fig. 18 shows the state immediately before the suction disk unit 202 moves upper right in the figure.

The device in Fig. 18 (2) shows a position and a posture of the device wherein;
the orthogonal wheel unit 55a of the suction disk unit 201 is withdrawn,
the parallel wheel unit 54a projects and is kicked to the surface 1,
the orthogonal wheel unit 55b of the suction disk unit 202 is withdrawn,
the parallel wheel unit 54b projects and is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and a piston rod of the air cylinder 8a is extended.
When the air cylinder 8a is withdrawn in such a state, the suction disk unit 202 swings lower right in the figure.

(2) of Fig. 18 shows the state immediately before the suction disk unit 202 moves lower right in the figure.

The device in Fig. 18 (3) shows a position and a posture of the device wherein;
the orthogonal wheel unit 55a of the suction disk unit 201 is withdrawn,
the parallel wheel unit 54a projects and is kicked to the surface 1,
the parallel wheel unit 54b of the suction disk unit 202 is withdrawn,
the orthogonal wheel unit 55b projects and is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and each piston rod of the air cylinder 7a, 7b, 8a, 8b is withdrawn.

When the air cylinder 7a is extended in such a state, the suction disk unit 202 swings lower right in the figure.

(3) of Fig. 18 shows the state immediately before the suction disk unit 202 moves lower right in the figure.

The device in Fig. 18 (4) shows a position and a posture of the device wherein;
the orthogonal wheel unit 55a of the suction disk unit 201 is withdrawn,
the parallel wheel unit 54a projects and is kicked to the surface 1,
the orthogonal wheel unit 55b of the suction disk unit 202 is withdrawn,
the parallel wheel unit 54b projects and is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and a piston rod of the each air cylinder 7a is extended.
When the air cylinder 7a is withdrawn in such a state, the suction disk unit 202 swings upper right in the figure.

(4) of Fig. 18 shows the state immediately before the suction disk unit 202 swings upper right in the figure.

The device in Fig. 18 (5) shows a position and a posture of the device wherein;
the orthogonal wheel unit 55a of the suction disk unit 201 is withdrawn,
the parallel wheel unit 54a projects and is kicked to the surface 1,
the parallel wheel unit 54b of the suction disk unit 202 is withdrawn,
the orthogonal wheel unit 55b projects and is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and each piston rod of the air cylinder 7a, 7b, 8a, 8b is withdrawn.
When the air cylinder 7a, 7b, 8a, 8b is extended in such a state, the suction disk unit 202 moves right in the figure.

(5) of Fig. 18 shows the state immediately before the suction disk unit 202 moves right in the figure.

The device in Fig. 18 (6) shows a position and a posture of the device wherein; the parallel wheel unit 54a of the suction disk unit 201 is withdrawn,
the orthogonal wheel unit 55a projects and is kicked to the surface 1,
the orthogonal wheel unit 55b of the suction disk unit 202 is withdrawn,
the parallel wheel unit 54b projects and is kicked to the surface 1,
the valve of the negative pressure regulating valve unit of the suction disk unit 201 is opened and the vacuum level is at low level,
the valve of the negative pressure regulating valve unit of the suction disk unit 202 is closed and the vacuum level is at high level,
and each piston rod of the air cylinder 7a, 7b, 8a, 8b is extended.
When the air cylinder 7a, 8a is withdrawn in such a state, the suction disk unit 201 moves right in the figure.

(6) of Fig. 18 shows the state immediately before the suction disk unit 201 moves right in the figure.

The device in Fig. 18 (7) shows a position and a posture of the device wherein;
the orthogonal wheel unit 55a of the suction disk unit 201 is withdrawn,
the parallel wheel unit 54a projects and is kicked to the surface 1,
the parallel wheel unit 54b of the suction disk unit 202 is withdrawn,
the orthogonal wheel unit 55b projects and is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and each piston rod of the air cylinder 7a, 7b, 8a, 8b is withdrawn.
When the air cylinder 7a, 7b, 8a, 8b is withdrawn in such a state, the suction disk unit 201 moves right in the figure.

(7) of Fig. 18 shows the state immediately before the suction disk unit 201 moves right in the figure.

Hereafter, the suction disk unit 202 travels toward the right direction swinging by repeating the operation described above at (2) through (7) in Fig. 18.

Next, the movement procedure of the embodiment example of the device of the second invention afore-described in Fig. 11 through Fig. 15 will be explained bellow with reference to Fig. 19 when the device steers toward the upper right direction in Fig. 19.

The device in Fig. 19 (1) shows a position and a posture of the device wherein;

the orthogonal wheel unit 55a of the suction disk unit 201 is withdrawn,

the parallel wheel unit 54a projects and is kicked to the surface 1,

the parallel wheel unit (54b) of the suction disk unit 202 is withdrawn,

the orthogonal wheel unit 55b projects and is kicked to the surface 1,

the valve of the negative pressure regulating valve unit of the suction disk unit 201 is closed and the vacuum level is at high level,

the valve of the negative pressure regulating valve unit of the suction disk unit 202 is opened and the vacuum level is at low level,

and each piston rod of the air cylinder 7a, 7b, 8a, 8b is withdrawn.

When the air cylinder 7b is extended in such a state, the suction disk unit 202 rotates clockwise in the figure.

(1) of Fig. 19 shows the state immediately before the suction disk unit 202 rotates clockwise in the figure.

The device in Fig. 19 (2) shows a position and a posture of the device wherein;

the orthogonal wheel unit 55a of the suction disk unit 201 is withdrawn,

the parallel wheel unit 54a projects and is kicked to the surface 1,

the orthogonal wheel unit 55b of the suction disk unit 202 is withdrawn,

the parallel wheel unit 54b projects and is kicked to the surface 1,

the valve of the negative pressure regulating valve unit of the suction disk unit 201 is closed and the vacuum level is at high level,

the valve of the negative pressure regulating valve unit of the suction disk unit 202 is opened and the vacuum level is at low level,

and a piston rod of the air cylinder 7b is extended.

When the air cylinder 7a, 8a is extended in such a state, the suction disk unit 202 moves upper right in the figure.

(2) of Fig. 19 shows the state immediately before the suction disk unit 202 moves upper right in the figure.

The device in Fig. 19 (3) shows a position and a posture of the device wherein;

the orthogonal wheel unit 55a of the suction disk unit 201 is withdrawn,

the parallel wheel unit 54a projects and is kicked to the surface 1,

the parallel wheel unit 54b of the suction disk unit 202 is withdrawn,

the orthogonal wheel unit 55b projects and is kicked to the surface 1,

the valve of the negative pressure regulating valve unit of the suction disk unit 201 is closed and the vacuum level is at high level,

the valve of the negative pressure regulating valve unit of the suction disk unit 202 is opened and the vacuum level is at low level,

and each piston rod of the air cylinder 7a, 7b, 8a is extended and a piston rod of the air cylinder 8b is withdrawn.

When the air cylinder 7b is withdrawn in such a state, the suction disk unit 202 rotates counterclockwise in the figure.

(3) of Fig. 19 shows the state immediately before the suction disk unit 202 rotates counterclockwise in the figure.

The device in Fig. 19 (4) shows a position and a posture of the device wherein;

the parallel wheel unit 54a of the suction disk unit 201 is withdrawn,

the orthogonal wheel unit 55a projects and is kicked to the surface 1,

the orthogonal wheel unit 55b of the suction disk unit 202 is withdrawn,

the parallel wheel unit 54b projects and is kicked to the surface 1,

the valve of the negative pressure regulating valve unit of the suction disk unit 201 is opened and the vacuum level is at low level,

the valve of the negative pressure regulating valve unit of the suction disk unit 202 is closed and the vacuum level is at high level,

and each piston rod of the air cylinder 7a, 8a is extended.

When the air cylinder 7a, 8a is withdrawn in such a state, the suction disk unit 201 moves upper right in the figure.

(4) of Fig. 19 shows the state immediately before the suction disk unit 201 moves upper right in the figure.

The device in Fig. 19 (5) shows a position and a posture of the device wherein;

the orthogonal wheel unit 55a of the suction disk unit 201 is withdrawn,

the parallel wheel unit 54a projects and is kicked to the surface 1,

the parallel wheel unit 54b of the suction disk unit 202 is withdrawn,

the orthogonal wheel unit 55b projects and is kicked to the surface 1,

the valve of the negative pressure regulating valve unit of the suction disk unit 201 is closed and the vacuum level is at high level,

the valve of the negative pressure regulating valve unit of the suction disk unit 202 is opened and the vacuum level is at low level,

and each piston rod of the air cylinder 7a, 7b, 8a, 8b is withdrawn.

When the air cylinder 7a, 7b, 8a, 8b is extended in such a state, the suction disk unit 202 moves upper right in the figure.

(5) of Fig. 19 shows the state immediately before the suction disk unit 202 moves upper right in the figure.

Next, the movement procedure of the embodiment example of the device of the second invention afore-described in Fig. 11 through Fig. 15 will be explained bellow with reference to Fig. 20 when the device steers toward the upper right direction in Fig. 20.

The device in Fig. 20 (1) shows a position and a posture of the device wherein;

the orthogonal wheel unit 55a of the suction disk unit 201 is withdrawn,

the parallel wheel unit 54a projects and is kicked to the surface 1,

the parallel wheel unit (54b) of the suction disk unit 202 is withdrawn,

the orthogonal wheel unit 55b projects and is kicked to the surface 1,

the valve of the negative pressure regulating valve unit of the suction disk unit 201 is closed and the vacuum level is at high level,

the valve of the negative pressure regulating valve unit of the suction disk unit 202 is opened and the vacuum level is at low level,

and each piston rod of the air cylinder 7a, 7b, 8a, 8b is withdrawn.

When the air cylinder 8b is extended in such a state, the suction disk unit 202 rotates counterclockwise in the figure.

(1) of Fig. 20 shows the state immediately before the suction disk unit 202 rotates counterclockwise in the figure.

The device in Fig. 20 (2) shows a position and a posture of the device wherein;

the orthogonal wheel unit 55a of the suction disk unit 201 is withdrawn,

the parallel wheel unit 54a projects and is kicked to the surface 1,

the parallel wheel unit 54b of the suction disk unit 202 is withdrawn,

the orthogonal wheel unit 55b projects and is kicked to the surface 1,

the valve of the negative pressure regulating valve unit of the suction disk unit 201 is closed and the vacuum level is at high level,

the valve of the negative pressure regulating valve unit of the suction disk unit 202 is opened and the vacuum level is at low level,

and a piston rod of the air cylinder 8b is extended.

When the air cylinder 7a, 8a is extended in such a state, the suction disk unit 202 moves upper right in the figure.

(2) of Fig. 20 shows the state immediately before the suction disk unit 202 moves upper right in the figure.

The device in Fig. 20 (3) shows a position and a posture of the device wherein;

the orthogonal wheel unit 55a of the suction disk unit 201 is withdrawn,

the parallel wheel unit 54a projects and is kicked to the surface 1,

the parallel wheel unit 54b of the suction disk unit 202 is withdrawn,

the orthogonal wheel unit 55b projects and is kicked to the surface 1,

the valve of the negative pressure regulating valve unit of the suction disk unit 201 is closed and the vacuum level is at high level,

the valve of the negative pressure regulating valve unit of the suction disk unit 202 is opened and the vacuum level is at low level,
and each piston rod of the air cylinder 7a, 7b, 8b is extended and a piston rod of the air cylinder 8a is withdrawn.
When the air cylinder 8b is withdrawn in such a state, the suction disk unit 202 rotates clockwise in the figure.

(3) of Fig. 20 shows the state immediately before the suction disk unit 202 rotates clockwise in the figure.

The device in Fig. 20 (4) shows a position and a posture of the device wherein;
the parallel wheel unit 54a of the suction disk unit 201 is withdrawn,
the orthogonal wheel unit 55a projects and is kicked to the surface 1,
the orthogonal wheel unit 55b of the suction disk unit 202 is withdrawn,
the parallel wheel unit 54b projects and is kicked to the surface 1,
the valve of the negative pressure regulating valve unit of the suction disk unit 201 is opened and the vacuum level is at low level,
the valve of the negative pressure regulating valve unit of the suction disk unit 202 is closed and the vacuum level is at high level,
and each piston rod of the air cylinder 7a, 8a is extended.
When the air cylinder 7a, 8a is withdrawn in such a state, the suction disk unit 201 moves upper right in the figure.

(4) of Fig. 20 shows the state immediately before the suction disk unit 201 moves upper right in the figure.

The device in Fig. 20 (5) shows a position and a posture of the device wherein;
the orthogonal wheel unit 55a of the suction disk unit 201 is withdrawn,
the parallel wheel unit 54a projects and is kicked to the surface 1,
the parallel wheel unit 54b of the suction disk unit 202 is withdrawn,
the orthogonal wheel unit 55b projects and is kicked to the surface 1,
the valve of the negative pressure regulating valve unit of the suction disk unit 201 is closed and the vacuum level is at high level,
the valve of the negative pressure regulating valve unit of the suction disk unit 202 is opened and the vacuum level is at low level,
and each piston rod of the air cylinder 7a, 7b, 8a, 8b is withdrawn.
When the air cylinder 7a, 7b, 8a, 8b is extended in such a state, the suction disk unit 202 moves upper right in the figure.

(5) of Fig. 20 shows the state immediately before the suction disk unit 202 moves upper right in the figure.

In Fig. 19, the shown in the figure steer method enables to helm it with a large angle. In Fig. 20, the shown in the figure steer method enables to helm it with a small angle.
The device of the embodiment example of the second invention of the invention afore-described and shown in Fig. 11 through Fig. 20 brings an effect that one suction disk unit at movable state is moved easily and surely in the aimed direction by using the other suction disk unit at non-movable state of which function is as a kick foot which adheres to the surface strongly.
The effect is brought by a rapid increase of the vacuum level of the suction disk at non-movable state compared with the vacuum level of the suction disk at movable state.
The rapid increase of the vacuum level is brought by the equipment of each suction disk unit of the negative pressure regulating valve unit with a function to selectively control the vacuum level of each suction disk unit.
Further, the second invention of the invention brings another effect that one suction disk unit at moving state is swung easily and surely in the aimed direction by using the reciprocating actuator unit described above which connects two sets of suction disk units.
The effect originates in increase of strength of mechanism of the reciprocating actuator unit that transmits swing power.
The reciprocating actuator unit comprises a left side reciprocating actuator, a right side reciprocating actuator, and a connection means for the rod case units of the reciprocating actuators.
The increase of strength of the mechanism originates in the restriction power of the connection means restricted so that a relative position of the right reciprocating actuator and the left reciprocating actuator should not change in a parallel direction in the direction where the device is moved.
This invention provides a device which can be moved with stability because the device is excellent in the reproducibility of the moving operation.
This feature originates in the feature with a large frictional force in the direction which the rotation axis of the wheel is parallel to, though the frictional force is small in the direction which the rotation axis of the wheel is orthogonal to.
This invention provides a device which makes one suction disk unit at a movable state move easily and surely in the aimed direction.

In the second invention having wheels with rotating shafts, it is very important for the rotating shafts to be controlled the direction of the shafts according to the shape of the device for each time series when the device performs steering operation.

This invention provides a device by using a cheap method by a simple structure for the rotating shafts to be controlled the direction of the shafts as described bellow.

The device is equipped with two types of wheels, i.e., one having a rotating shaft parallel with the moving direction of the device and the other having a rotating shaft orthogonal to the moving direction are fitted to the suction disk units, and these two types of wheels are selectively pressed against the surface of the object according to the shape of the device for each time series when the device performs steering operation.

The second invention afore-described brings the effects as described bellow.

The second invention of the inventions afore-described brings the effects as follows. First, this invention provides a device which has improved movement performance that originates in the minimum small steer radius and in the easy turn in the place.

Second, this invention provides a device controlled like mind which has improved control performance that originates in the improving reproducibility of the steer movement of the device.

Third, this invention provides a device which has high production capacity while vacuum cleaning that originates in the increase of the cleaning width of the suction disk units.

The increase of the cleaning width of the disks is caused by swinging of the disks.

Fourth, this invention provides a device which can travel on the surface even if the oil slick adheres to the surface.

The function originates in the increase of the driving power of the device that is caused by the increase of the friction between the surface and the suction disk unit at non-movable state.

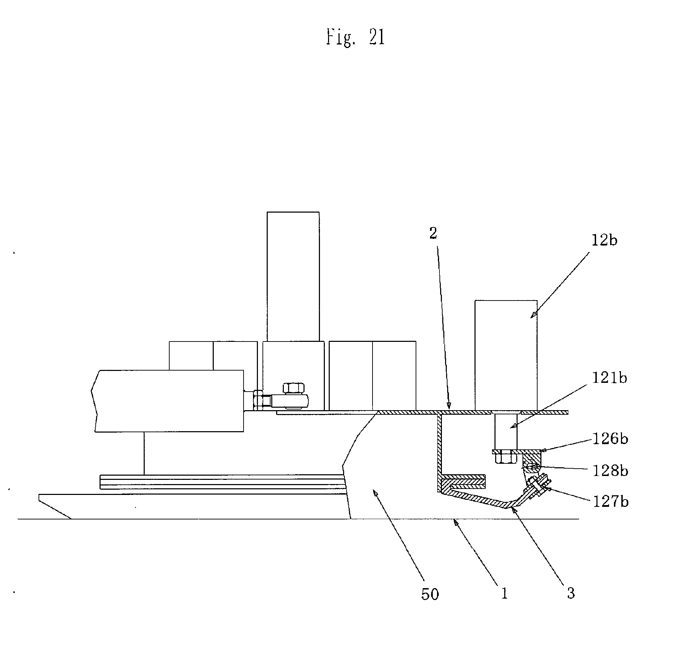

Further, in the device of the embodiment example of the second invention of the invention afore-described and shown in Fig. 11 through Fig. 15, each suction disk unit is equipped with a vacuum seal breaking means so that a part or all of the edge of the vacuum seal member revolts from the surface at arbitrariness as shown the section shape of the device in Fig. 21.

The vacuum seal breaking means is composed of an air cylinder 12b which is fixed on the upper plate of the suction housing 2, a lifting lug 126b which is fixed on the edge of the piston rod 121 b, a lifting lug 127b which is fixed on a part of the edge of the vacuum sealing member 3, and a pin 128b which connects the lifting lug 126b and the lifting lug 127b.

When the piston rod 121 b pulls strongly the edge of the vacuum sealing member 3 in a direction left from the surface, the vacuum seal breaking means makes an opening hole between the edge of the vacuum sealing member 3 and the surface to decrease the vacuum level inside of the suction disk unit even if the edge of the vacuum sealing member 3 is pressed strongly against the surface by the high vacuum level of the pressure-reduced area 50.

The effect of the vacuum seal breaking means afore-described will be described in detail bellow.

The fifth target is to provide an improved device which banishes tight work such as a suck work of dirt that a worker holds an end of a heavy weight suction hose connected with a vacuum recovery unit installed in a heavy-duty truck.

The moving suction disks of the device collect dirt in place of the worker by being connected with the vacuum recovery unit.

To achieve the afore-described technical problem-solving target of the fifth, this invention proposes a technology mentioned bellow to achieve the fifth target.

The first to achieve the fifth target, it is needed the technology to increase extremely the vacuum degree of the moving suction disk at non-movable state in comparison with the vacuum degree of the suction disk unit at a movable state.

The second to achieve the fifth target, each suction disk unit is equipped with a vacuum seal breaking means so that the vacuum seal revolts from the surface and the vacuum degree inside of the suction disk unit decreases at arbitrariness.

When it is put into the state that one suction disk unit doesn't move along the surface, the vacuum degree inside of the other suction disk unit decreases because of revolting of the vacuum seal from the surface in order that the other suction disk moves along the surface.

after the setting that one suction disk unit is set at the non-movable state and the other suction disk unit is set at the movable state, dirt etc. are inhaled from the space between the vacuum seal and the surface which is made by the vacuum seal breaking means equipped with the suction disk unit at the movable state, and the dirt etc. are transported to the vacuum recovery unit through the suction hose.

Thus, this invention provides a device which banishes tight and dangerous work such as a suck work of dirt that a worker holds an end of a heavy weight suction hose connected with a vacuum recovery unit installed in a heavy-duty truck.

The moving suction disks of the device collect dirt in place of the worker by being connected with the vacuum recovery unit while running for instance in the oil storage.

The above section explained in detail preferred embodiment examples of the device constructed in accordance with this invention with reference to the drawings attached hereto. Needless to say, this invention is not restricted to such embodiment examples but may be changed or modified in various ways without departing from the scope of this invention.

**Claims**

1. A device movable along a surface of an object having, at least, two suction disk units which are arranged forward and behind the direction where said device is moved and a reciprocating actuator unit which are arranged in the middle of said two suction disk units and connects the two suction disk units,
each of such suction disk units having a state setting means which selectively sets such suction disk unit at a movable state which allows such unit to move along the surface and at a non-movable state which causes such unit to engage with the surface,
wherein one suction disk unit is caused to move along the surface when said suction disk unit is set at the movable state and the other suction disk unit is set at the non-movable state while the reciprocating actuator unit is extended and contracted; each of such suction disk units comprising: a suction housing connected to a pressure reducing means to suck in a fluid; a vacuum sealing member installed on said suction housing, a part of which is caused to contact the surface of an object, and which defines a pressure-reduced area together with said suction housing and said surface of an object;
such state setting means having a non-movable means and a movable means: the non-movable means increases the frictional force between the suction disk unit and the surface and the movable means decreases the frictional force between the suction disk unit and the surface, is composed that the non-movable means and the movable means can be arbitrarily selected;
such reciprocating actuator unit comprising: a left reciprocating actuator unit is arranged at the left side of the direction where the device is moved, a right reciprocating actuator unit is arranged at the right side of the direction where the device is moved, and a connection means for the rod case units of said reciprocating actuators;
such left reciprocating actuator comprising: a left rod case unit, a left front reciprocating rod arranged forward of the left rod case unit and is connected at the left side of the front suction disk unit, a left rear reciprocating rod arranged behind the left rod case unit and is connected at the left side of the rear suction disk unit;
such right reciprocating actuator comprising: a right rod case unit, a right front reciprocating rod arranged forward of the right rod case unit and is connected at the right side of the front suction disk unit, and a right rear reciprocating rod arranged behind the right rod case unit and is connected at the right side of the rear suction disk unit;
such connection means for the rod case units is restricted so that a relative position of the right reciprocating actuator and the left reciprocating actuator should not change in a parallel direction in the direction where the device is moved;
in order to make the device to turn left front, in the first stage, after the setting that the front suction disk unit is set at the movable state and the rear suction disk unit is set at the non-movable state, the front suction disk unit is caused to move to the left front along the surface when the right rear reciprocating rod is extended;
in the second stage, after the setting that the front suction disk unit is set at the non-movable state and the rear suction disk unit is set at the movable state, the rear suction disk unit is caused to move to the left front along the surface when the right rear coupling means is contracted;
in order to make the device to turn right front, in the first stage, after the setting that the front suction disk unit is set at the movable state and the rear suction disk unit is set at the non-movable state, the front suction disk unit is caused to move to the right front along the surface when the left rear reciprocating rod is extended;
in the second stage, after the setting that the front suction disk unit is set at the non-movable state and the rear suction disk unit is set at the movable state, the rear suction disk unit is caused to move to the right front along the surface when the left rear coupling means is contracted.

2. The device described in Claim 1 above, wherein the non-movable means increases the frictional force between the suction disk unit and the surface by pressing the material with large coefficient of friction against the surface, and wherein the movable means decreases the frictional force between the suction disk unit and the surface by pressing the material with small coefficient of friction against the surface, and having arranged thereon the state setting means which so sets selectively two states - one state in which the non-movable means is thrust out in the direction toward the surface compared with the movable means, and the other state in which the movable means is thrust out in the direction toward the surface compared with the non-movable means.

3. The device described in Claim 1 above, wherein the non-movable means increases the frictional force between the suction disk unit and the surface by increasing the vacuum level in the suction disk unit, and wherein the movable means decreases the frictional force between the suction disk unit and the surface by decreasing the vacuum level in the suction disk unit, and having arranged thereon the state setting means which so sets selectively two states - one state in which the non-movable means is set as increasing the vacuum level in the suction disk unit, and the other state in which the movable means is set as decreasing the vacuum level in the suction disk unit.

4. The device described in Claim 1 above; wherein the non-movable means increases the frictional force between the suction disk unit and the surface by pressing the material with large coefficient of friction against the surface, and wherein the movable means decreases the frictional force between the suction disk unit and the surface by pressing the material with small coefficient of friction against the surface, and having arranged thereon the state setting means which so sets selectively two states - one state in which the non-movable means is thrust out in the direction toward the surface compared with the movable means, and the other state in which the movable means is thrust out in the direction toward the surface compared with the non-movable means; further, wherein the non-movable means increases the frictional force between the suction disk unit and the surface by increasing the vacuum level in the suction disk unit, and wherein the movable means decreases the frictional force between the suction disk unit and the surface by decreasing the vacuum level in the suction disk unit, and having arranged thereon the state setting means which so sets selectively two states - one state in which the non-movable means is set as increasing the vacuum level in the suction disk unit, and the other state in which the movable means is set as decreasing the vacuum level in the suction disk unit.

5. The device described in Claim 3 and Claim 4 above and having arranged a negative pressure regulating valve unit with each suction disk unit, each of such negative pressure regulating valve unit having two functions that either function can be arbitrarily selected - one of the functions obstructs the increase of the vacuum level of the suction disk unit by making an outside fluid flow in the unit when the vacuum level in the unit increases more than the preset low vacuum level, the other function increases the vacuum level in the suction disk unit by obstructing the inflow of an outside fluid when the vacuum level in the unit increases more than the preset low vacuum level, the negative pressure regulating valve unit being selected the function which obstructs the increase of the vacuum level of the suction disk unit while the suction disk unit is set at the movable state, the negative pressure regulating valve unit being selected the function which increases the vacuum level of the suction disk unit while the suction disk unit is set at the non-movable state,

6. The device described in Claim 1 through Claim 5 above and having arranged thereon an operation procedure that; at the first operation procedure, the front suction disk swings left when the front suction disk is first set to movable state, the rear suction disk is set to non-movable state, and right rear reciprocating rod is extended next; at the second operation procedure, the front suction disk swings right when the front suction disk is first set to movable state, the rear suction disk is set to non-movable state, and right rear reciprocating rod is contracted next.

7. The device described in Claim 1 through Claim 5 above and having arranged thereon an operation procedure that; at the first operation procedure, the front suction disk swings right when the front suction disk is first set to movable state, the rear suction disk is set to non-movable state, and left rear reciprocating rod is extended next; at the second operation procedure, the front suction disk swings left when the front suction disk is first set to movable state, the rear suction disk is set to non-movable state, and left rear reciprocating rod is contracted next.

8. The device described in Claim 1 through Claim 5 above and having arranged thereon an operation procedure that; at the first operation procedure, the front suction disk swings left when the front suction disk is first set to movable state, the rear suction disk is set to non-movable state, and right rear reciprocating rod is extended next; at the second operation procedure, the front suction disk swings right when the front suction disk is first set to movable state, the rear suction disk is set to non-movable state, and right rear reciprocating rod is contracted next; at the third operation procedure, the front suction disk swings right when the front suction disk is first set to movable state, the rear suction disk is set to non-movable state, and left rear reciprocating rod is extended next; at fourth operation procedure, the front suction disk swings left when the front suction disk is first set to movable state, the rear suction disk is set to non-movable state, and left rear reciprocating rod is contracted next.

9. The device described in Claim 1 through Claim 5 above and having arranged thereon an operation procedure that; at the first operation procedure, the front suction disk swings right when the front suction disk is first set to movable state, the rear suction disk is set to non-movable state, and left rear reciprocating rod is extended next; at the second operation procedure, the front suction disk swings left when the front suction disk is first set to movable state, the rear suction disk is set to non-movable state, and left rear reciprocating rod is contracted next; at the third operation procedure, the front suction disk swings left when the front suction disk is first set to movable state, the rear suction disk is set to non-movable state, and right rear reciprocating rod is extended next; at fourth operation procedure, the front suction disk swings right when the front suction disk is first set to movable state, the rear suction disk is set to non-movable state, and right rear reciprocating rod is contracted next.

10. A device movable along a surface of an object having, at least, two suction disk units which are arranged forward and behind the direction where said device is moved and a reciprocating actuator unit which are arranged in the middle of said two suction disk units and connects the two suction disk units,

each of such suction disk units having a state setting means which selectively sets such suction disk unit at a movable state which allows such unit to move along the surface and at a non-movable state which causes such unit to engage with the surface,

wherein one suction disk unit is caused to move along the surface when said suction disk unit is set at the movable state and the other suction disk unit is set at the non-movable state while the reciprocating actuator unit is extended and contracted; each of such suction disk units comprising: a suction housing connected to a pressure reducing means to suck in a fluid; a vacuum sealing member installed on said suction housing, a part of which is caused to contact the surface of an object, and which defines a pressure-reduced area together with said suction housing and said surface of an object;

such state setting means having a non-movable means and a movable means: the non-movable means increases the frictional force between the suction disk unit and the surface and the movable means decreases the frictional force between the suction disk unit and the surface, is composed that the non-movable means and the movable means can be arbitrarily selected;

each suction disk unit having a wheel or plural wheels equipped with a rotating shaft parallel with the moving direction of the device - the parallel wheel unit as a non-movable means and having a wheel or plural wheels equipped with a rotating shaft orthogonal to the moving direction - the orthogonal wheel unit as a movable means,

such non-movable means including a means which increases selectively the vacuum level in the suction disk unit, such non-movable means including a means which presses selectively the parallel wheel unit against the surface, such non-movable means including a means which decreases selectively the vacuum level in the suction disk unit, such movable means including a means which presses selectively the orthogonal wheel unit against the surface;

such reciprocating actuator unit comprising: a left reciprocating actuator unit is arranged at the left side of the direction where the device is moved, a right reciprocating actuator unit is arranged at the right side of the direction where the device is moved, and a connection means for the rod case units of said reciprocating actuators;

such left reciprocating actuator comprising: a left rod case unit, a left front reciprocating rod arranged forward of the left rod case unit and is connected at the left side of the front suction disk unit, a left rear reciprocating rod arranged behind the left rod case unit and is connected at the left side of the rear suction disk unit;

such right reciprocating actuator comprising: a right rod case unit, a right front reciprocating rod arranged forward of the right rod case unit and is connected at the right side of the front suction disk unit, and a right rear reciprocating rod arranged behind the right rod case unit and is connected at the right side of the rear suction disk unit;

such connection means for the rod case units is restricted so that a relative position of the right reciprocating actuator and the left reciprocating actuator should not change in a parallel direction in the direction where the device is moved;

**11.** The device described in Claim 10 above, wherein;

in order to make the device to turn left front, in the first stage, after the setting that the front suction disk unit is set at the movable state and the rear suction disk unit is set at the non-movable state, the front suction disk unit is caused to move to the left front along the surface when the right rear reciprocating rod is extended;

in the second stage, after the setting that the front suction disk unit is set at the non-movable state and the rear suction disk unit is set at the movable state, the rear suction disk unit is caused to move to the left front along the surface when the right rear reciprocating rod is contracted;

in order to make the device to turn right front, in the first stage, after the setting that the front suction disk unit is set at the movable state and the rear suction disk unit is set at the non-movable state, the front suction disk unit is caused to move to the right front along the surface when the left rear reciprocating rod is extended; in the second stage, after the setting that the front suction disk unit is set at the non-movable state and the rear suction disk unit is set at the movable state, the rear suction disk unit is caused to move to the right front along the surface when the left rear reciprocating rod is contracted.

**12.** The device described in Claim 10 above, wherein;

in order to make the device to turn left front, in the first stage, after the setting that the front suction disk unit is set at the movable state by pressing the orthogonal wheel unit against the surface and the rear suction disk unit is set at the non-movable state by pressing the parallel wheel unit against the surface, the front suction disk unit is caused to swing to clockwise along the surface when the left front reciprocating rod is extended;

in the second stage, after the setting that the front suction disk unit is set at the movable state by pressing the orthogonal wheel unit against the surface and the rear suction disk unit is set at the non-movable state by pressing the parallel wheel unit, the front suction disk unit is caused to move to the left front along the surface when the left rear and right rear reciprocating rods are extended;

in order to make the device to turn right front, in the first stage, after the setting that the front suction disk unit is set at the movable state by pressing the orthogonal wheel unit against the surface and the rear suction disk unit is set at the non-movable state by pressing the parallel wheel unit against the surface , the front suction disk unit is caused to swing counterclockwise along the surface when the right front reciprocating rod is extended;
in the second stage, after the setting that the front suction disk unit is set at the movable state by pressing the parallel wheel unit against the surface and the rear suction disk unit is set at the non-movable state by pressing the parallel wheel unit against the surface , the front suction disk unit is caused to move to the right front along the surface when the left rear and right rear reciprocating rods are extended.

13. The device described in Claim 10 above, wherein;
in order to make the device to turn left front, in the first stage, after the setting that the front suction disk unit is set at the movable state and the rear suction disk unit is set at the non-movable state, the front suction disk unit is caused to swing to counterclockwise along the surface when the right front reciprocating rod is extended;
in the second stage, after the setting that the front suction disk unit is set at the movable state and the rear suction disk unit is set at the non-movable state, the front suction disk unit is caused to move to the left front along the surface when the left rear and right rear reciprocating rods are extended;
in order to make the device to turn right front, in the first stage, after the setting that the front suction disk unit is set at the movable state and the rear suction disk unit is set at the non-movable state, the front suction disk unit is caused to swing clockwise along the surface when the left front reciprocating rod is extended;
in the second stage, after the setting that the front suction disk unit is set at the movable state and the rear suction disk unit is set at the non-movable state, the front suction disk unit is caused to move to the right front along the surface when the left rear and right rear reciprocating rods are extended;

14. The device described in Claim 10 through Claim 13 above; wherein the non-movable means increases the frictional force between the suction disk unit and the surface by pressing the material with large coefficient of friction against the surface, and wherein the movable means decreases the frictional force between the suction disk unit and the surface by pressing the wheel against the surface, and having arranged thereon the state setting means which so sets selectively two states - one state in which the non-movable means is thrust out in the direction toward the surface compared with the movable means, and the other state in which the movable means is thrust out in the direction toward the surface compared with the non-movable means.

15. The device described in Claim 10 through Claim 13 above; wherein the non-movable means increases the frictional force between the suction disk unit and the surface by increasing the vacuum level in the suction disk unit, and wherein the movable means decreases the frictional force between the suction disk unit and the surface by decreasing the vacuum level in the suction disk unit, and having arranged thereon the state setting means which so sets selectively two states - one state in which the non-movable means is set as increasing the vacuum level in the suction disk unit, and the other state in which the movable means is set as decreasing the vacuum level in the suction disk unit.

16. The device described in Claim 10 through Claim 13 above; wherein the non-movable means increases the frictional force between the suction disk unit and the surface by pressing the material with large coefficient of friction against the surface, and wherein the movable means decreases the frictional force between the suction disk unit and the surface by pressing the material with small coefficient of friction against the surface, and having arranged thereon the state setting means which so sets selectively two states - one state in which the non-movable means is thrust out in the direction toward the surface compared with the movable means, and the other state in which the movable means is thrust out in the direction toward the surface compared with the non-movable means; further, wherein the non-movable means increases the frictional force between the suction disk unit and the surface by increasing the vacuum level in the suction disk unit, and wherein the movable means decreases the frictional force between the suction disk unit and the surface by decreasing the vacuum level in the suction disk unit, and having arranged thereon the state setting means which so sets selectively two states - one state in which the non-movable means is set as increasing the vacuum level in the suction disk unit, and the other state in which the movable means is set as decreasing the vacuum level in the suction disk unit.

17. The device described in Claim 15 through Claim 16 above and having arranged a negative pressure regulating valve unit with each suction disk unit, each of such negative pressure regulating valve unit having two functions that either function can be arbitrarily selected - one of the functions obstructs the increase of the vacuum level of the suction disk unit by making an outside fluid flow in the unit when the vacuum level in the unit increases more than the preset low vacuum level, the other function increases the vacuum level in the suction disk unit by obstructing the inflow of an outside fluid when the vacuum level in the unit increases more than the preset low vacuum level, the negative pressure regulating valve unit being selected the function which obstructs the increase of the vacuum level of the suction disk unit while the suction disk unit is set at the movable state, the negative pressure regulating valve unit being selected the function which increases the vacuum level of the suction disk unit while the suction disk unit is set at the non-movable state.

18. The device described in Claim 10 through Claim 17 above and having arranged thereon an operation procedure that; at the first operation procedure, the front suction disk swings left when the front suction disk is first set to movable state by pressing the parallel wheel unit against the surface, the rear suction disk is set to non-movable state by pressing the parallel wheel unit against the surface, and right rear reciprocating rod is extended next; at the second operation procedure, the front suction disk swings right when the front suction disk is first set to movable state by pressing the parallel wheel unit against the surface, the rear suction disk is set to non-movable state by pressing the parallel wheel unit against the surface, and right rear reciprocating rod is contracted next.

19. The device described in Claim 10 through Claim 17 above and having arranged thereon an operation procedure that; at the first operation procedure, the front suction disk swings right when the front suction disk is first set to movable state by pressing the parallel wheel unit against the surface, the rear suction disk is set to non-movable state by pressing the parallel wheel unit against the surface, and left rear reciprocating rod is extended next; at the second operation procedure, the front suction disk swings left when the front suction disk is first set to movable state by pressing the parallel wheel unit against the surface, the rear suction disk is set to non-movable state by pressing the parallel wheel unit against the surface, and left rear reciprocating rod is contracted next.

20. The device described in Claim 10 through Claim 17 above and having arranged thereon an operation procedure that; at the first operation procedure, the front suction disk swings left when the front suction disk is first set to movable state by pressing the parallel wheel unit against the surface, the rear suction disk is set to non-movable state by pressing the parallel wheel unit against the surface, and right rear reciprocating rod is extended next; at the second operation procedure, the front suction disk swings right when the front suction disk is first set to movable state by pressing the parallel wheel unit against the surface, the rear suction disk is set to non-movable state by pressing the parallel wheel unit against the surface, and right rear reciprocating rod is contracted next; at the third operation procedure, the front suction disk swings right when the front suction disk is first set to movable state by pressing the parallel wheel unit against the surface, the rear suction disk is set to non-movable state by pressing the parallel wheel unit against the surface, and left rear reciprocating rod is extended next; at the fourth operation procedure, the front suction disk swings left when the front suction disk is first set to movable state by pressing the parallel wheel unit against the surface, the rear suction disk is set to non-movable state by pressing the parallel wheel unit against the surface, and left rear reciprocating rod is contracted next.

21. The device described in Claim 10 through Claim 17 above and having arranged thereon an operation procedure that; at the first operation procedure, the front suction disk swings right when the front suction disk is first set to movable state by pressing the parallel wheel unit against the surface, the rear suction disk is set to non-movable state by pressing the parallel wheel unit against the surface, and left rear reciprocating rod is extended next; at the second operation procedure, the front suction disk swings left when the front suction disk is first set to movable state by pressing the parallel wheel unit against the surface, the rear suction disk is set to non-movable state by pressing the parallel wheel unit against the surface, and left rear reciprocating rod is contracted next; at the third operation procedure, the front suction disk swings left when the front suction disk is first set to movable state by pressing the parallel wheel unit against the surface, the rear suction disk is set to non-movable state by pressing the parallel wheel unit against the surface, and right rear reciprocating rod is extended next; at the fourth operation procedure, the front suction disk swings right when the front suction disk is first set to movable state by pressing the parallel wheel unit against the surface, the rear suction disk is set to non-movable state by pressing the parallel wheel unit against the surface, and right rear reciprocating rod is contracted next.

22. The device described in Claim 1 through Claim 21 above, wherein each suction disk unit being equipped with a vacuum seal breaking means so that a part or all of the edge of the vacuum sealing member revolts from the surface at arbitrariness, the vacuum sealing member revolting from the surface while the other suction disk unit is at non-movable state.

Fig. 1

Fig. 2

Fig. 3

Fig. 4

Fig. 5

Fig. 6

Fig. 7

Fig. 8

o Stopper kicked to the surface

⊚ Caster kicked to the surface

# Fig. 9

o Stopper kicked to the surface

⊚ Caster kicked to the surface

Fig. 10

○ Stopper kicked to the surface
◎ Caster kicked to the surface

(1)

(2)

(3)

(4)

(5)

(6)

(7)

Fig. 11

Fig. 12

Fig. 13

Fig. 14

54b  10  55b  54b        55a  54a  55a

23                                              3

23

3                                              54a

55b

202  54b  55b        54a  55a  10  201

Fig. 15

## Fig. 16

⊟ Parallel wheel

⊕ Orthogonal wheel

## Fig. 17

Y0

⊞ Parallel wheel

⊹ Orthogonal wheel

(1)

7a  7b

54b

54a

X0

201  8a  8b  202

(2)

X0

(3)

X0

(4)

X0

(5)

X0

## Fig. 18

⊖ Parallel wheel

⊕ Orthogonal wheel

## Fig. 19

## Fig. 20

Fig. 21

## INTERNATIONAL SEARCH REPORT

| International application No. |
|---|
| PCT/JP2005/008113 |

| A. CLASSIFICATION OF SUBJECT MATTER |
|---|
| Int.Cl$^7$  B62D57/032 |

According to International Patent Classification (IPC) or to both national classification and IPC

| B. FIELDS SEARCHED |
|---|
| Minimum documentation searched (classification system followed by classification symbols) |
| Int.Cl$^7$  B62D57/032 |

Documentation searched other than minimum documentation to the extent that such documents are included in the fields searched
  Jitsuyo Shinan Koho           1922-1996   Jitsuyo Shinan Toroku Koho    1996-2005
  Kokai Jitsuyo Shinan Koho    1971-2005   Toroku Jitsuyo Shinan Koho    1994-2005

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | JP 3175052 B2  (Fukashi URAKAMI),<br>06 April, 2001 (06.04.01),<br>& US 5161631 A          & EP 430161 A2 | 1-22 |
| A | JP 2003-285782 A  (Fukashi URAKAMI),<br>07 October, 2003 (07.10.03),<br>& WO 03/082658 A1        & EP 1491432 A1 | 1-22 |
| A | JP 1-141184 A  (Bridgestone Corp.),<br>02 June, 1989 (02.06.89),<br>(Family: none) | 1-22 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 July, 2005 (06.07.05) | 19 July, 2005 (19.07.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

50

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3175052 B

- US 5161631 A